# EUROPEAN PATENT APPLICATION

(11) **EP 3 400 801 A1**
(43) Date of publication of application: **14.11.2018**
(21) Application number: 17170380.4
(22) Date of filing: 10.05.2017
(51) Int. Cl.: A01N 63/04, A01P 21/00

(54) **PLANT HEALTH EFFECT OF PURPUREOCILLIUM LILACINUM**

(71) Applicant: Bayer CropScience Aktiengesellschaft, 40789 Monheim am Rhein (DE); Bayer CropScience LP, Research Triangle Park, NC 27709 (US)
(72) Inventor: The designation of the inventor has not yet been filed
(74) Representative: BIP Patents

(57) **Abstract**

The present invention relates to a method for promoting or improving plant health and/or plant growth of agricultural plants wherein the plants, the plant propagules, the seed of the plants and/or the locus where the plants are growing or are intended to grow are treated with an effective amount of a composition comprising the fungus Purpureocillium lilacinum or spores thereof. Further aspects of the invention relate to uses of a composition comprising the fungus Purpureocillium lilacinum or spores thereof for promoting or improving plant health and/or plant growth.

## Description

The use of plant protection formulations comprising biological control agents (BCAs) has become a valuable alternative in the field of plant protection. Biological control agents directed against fungi or insects as well as those promoting plant health have been put on the market in different formulations.

A number of Purpureocillium lilacinum (formerly known as Paecilomyces lilacinus) strains have been described for use as a biological control agent. Such strains include strain 251 in the products BioAct, MeloCon and NemOut produced by Prophyta GmbH, a strain 580 in the product Biostat WP (ATCC no. 38740) produced by Laverlam, a strain in the product Bio-Nematon produced by the company T.Stanes and Company Ltd., a strain in the product Mysis produced by the company Varsha Bioscience and Technology India Pvt Ltd., one in the product Bioiconema available from Nico Orgo Maures, India, one in the product Nemat, available from Ballagro Agro Tecnologia Ltda, Brazil and one in the product Spectrum Pae L available from Promotora Tecnica Industrial, S.A. DE C.V., Mexico. Those strains of the species are known to have a nematicidal effect.

A plant health or plant growth promoting effect has been reported for several biological control agents such as e.g. Penicillium bilaii which enhances phosphorous uptake efficiency. For P. lilacinum, no such PGP or plant health effect has been reported so far.

Accordingly, in a first aspect, the present invention relates to a method for promoting or improving plant health of agricultural plants wherein the plants, the plant propagules, the seed of the plants and/or the locus where the plants are growing or are intended to grow are treated with an effective amount of a composition comprising the fungus Purpureocillium lilacinum or spores thereof.

As mentioned above, several P. lilacinum strain are known. Such strains include strain 251 in the products BioAct, MeloCon and NemOut produced by Prophyta GmbH, a strain 580 in the product Biostat WP (ATCC no. 38740) produced by Laverlam, a strain in the product Bio-Nematon produced by the company T.Stanes and Company Ltd., a strain in the product Mysis produced by the company Varsha Bioscience and Technology India Pvt Ltd., one in the product Bioiconema available from Nico Orgo Maures, India, one in the product Nemat, available from Ballagro Agro Tecnologia Ltda, Brazil and one in the product Spectrum Pae L available from Promotora Tecnica Industrial, S.A. DE C.V., Mexico. Those strains of the species are known to have a nematicidal effect.

In a preferred embodiment, promoting or improving plant health comprises achieving and/or manifests in improved stress tolerance, less dead basal leaves, greener leaf color, pigment content, photosynthetic activity and enhanced plant vigor. All of these properties as well as the one listed further below are measured in comparison with plants which were not treated with P. lilacinum but otherwise grown under the same conditions

In another preferred embodiment, promoting or improving plant growth comprises or manifests in tillering increase, increase in plant height, bigger leaf blade, bigger leaf surface, stronger tillers, earlier flowering, early grain maturity, less plant verse (lodging), increased shoot growth, increased plant stand, early and better germination, earlier emergence, improved crop yield, improved total vegetative weight or whole plant biomass, improved protein content, improved oil content, improved starch content, improved root growth (including root length), improved root size (including root surface), improved root weight and/or improved root effectiveness, improved shoot weight, increased root weight, increased plant biomass and improved fruit weight. The skilled person is aware that in some cases, the scope of terms here listed as falling within plant health may as well extend to plant growth and vice versa.

In a more preferred embodiment, improved stress tolerance comprises improved tolerance to drought, heat, salt, UV, water cold and/or xenobiotic conditions.

In a more preferred embodiment, plant growth refers to leaf surface, root growth, root size, root weight, fruit weight, shoot weight, plant biomass and/or crop yield.

As can be seen in the examples, P. lilacinum resulted in improved plant growth, in particular in improved root growth, root size, improved fruit weight, improved shoot weight and thus in improved crop yield.

Any characteristic listed above for promoting or improving plant health and/or plant growth may be improved by at least 5%, preferably at least 10%, more preferably at least 15%, at least 20% or even at least 25% or at least 30% or in some instances even more than 35% as compared to that of plants not treated with said composition or treated with a blank formulation.

For example, the composition according to the invention may result in an increased shoot weight of at least 5%, preferably at least 10%, more preferably at least 13%, at least 15% or at least 20% as compared to that of plants not treated with said composition or treated with a formulation not comprising P. lilacinum (in the examples also referred to as "blank"). In some cases shoot weight may even be increased by at least 25%.
An increase in plant biomass in plants treated with the composition according to the invention is preferably at least 5%, preferably at least 10%, more preferably at least 15%, at least 20% or even at least 25% or at least 30% as compared to that of plants not treated with said composition or treated with a blank formulation.
Root weight of plants treated according to the invention may be increased by at least 5%, preferably at least 10%, more preferably at least 15%, at least 20% or even at least 25% as compared to that of plants not treated with said composition or treated with a blank formulation. Similarly, treatment according to the invention may increase the root surface of a plant by at least 5%, at least 10% or at least 15%. In this way, root length of plants may be increased by 5%, preferably at least 10%, more preferably at least 15%, or even at least 20% as compared to that of plants not treated with said composition or treated with a blank formulation.
An increase in leaf surface area biomass in plants treated with the composition according to the invention may be at least 5%, preferably at least 8%, more preferably at least 10%, at least 14% or even at least 20% or at least 22% as compared to that of plants not treated with said composition or treated with a blank formulation.
Fruit weight of plants treated according to the invention may be increased by at least 5%, preferably at least 10%, more preferably at least 15%, at least 20% or even at least 25% or at least 30% as compared to that of plants not treated with said composition or treated with a blank formulation.

In the course of the present invention, it was surprisingly found that the improvement in root growth, root size, shoot growth, plant biomass, leaf surface area and crop yield (in the form of fruit weight) exceeds the expectations based on the plant protection, i.e. nematicidal effect, of P. lilacinum. This means that application of P. lilacinum upon infection with nematodes does not only have an effect to reduce the damage done by said nematodes but provides an additional plant health effect or plant growth promotion effect in the form of a disproportionally high yield and improved plant characteristics. This is demonstrated in example 1 appended to this application clearly showing that the nematode efficacy of P.lilacinum is not correlated with the plant health and plant growth effects observed upon treatment. It was further confirmed by the different conditions used that said effects are not correlated with certain environmental factors such as organic matter (OM), pH, soil texture and soil temperature.

In a preferred embodiment said Purpureocillium lilacinum is strain 251 as described in WO1991/002051 or a mutant thereof having all identifying characteristics of the respective strain. The strain 251 has been isolated from a Meloidogyne egg mass in Los Banos, Philippines and has been deposited with the Australian Government Analytical Laboratories (AGAL) in 1989 under the accession No. 89/030550. In this regard, the identifying characteristics of the strain relate to those defining the nematicidal activity and the PGP or plant health promoting activity. Accordingly, a mutant strain of P. lilacinum 251 still possesses the PGP/plant health effects and preferably also the nematicidal effects described further above but may differ in other properties such as e.g. storage stability of the spores produced by the fungus.
Exemplary commercial products containing *Paecilomyces lilacinus* strain 251 are BioAct^{®} WG and MeloCon WG. The activity of *Paecilomyces lilacinus* strain 251 is described inter alia in A. Khan et al., FEMS Microbiology Letters, 227, 107-111, 2003 and S. Kiewnick at al. Biological Control 38, 179-187, 2006. Its isolation and characteristic properties are disclosed in WO 91/02051, which is incorporated herein by reference.

In another preferred embodiment, said promoting or improving plant health and/or plant growth is independent of pathogenic nematode pressure.

Whereas it was found that the PGP or plant health effect of P. lilacinum application occurs in plants infested with nematodes, it was also confirmed that this effect is actually independent of any nematode infestations. In example 1, it can be seen that the effect on yield is present whereas the nematicidal efficacy is sometimes not at its maximum. This confirms that the effects observed are not correlated with the nematicidal activity of the fungus.

In another preferred embodiment, said promoting or improving plant health and/or plant growth is in the absence of pathogenic nematode pressure.

This is demonstrated in example 6 and shown on the exemplary crops tomato and cucumber.

Purpureocillium lilacinum is cultivated according to methods known in the art on an appropriate substrate, e. g. by submerged fermentation or solid-state fermentation, e. g. using a device disclosed in WO2005/012478 or WO1999/057239. Subsequently, the fungus or its organs, such as the spores or conidia is/are separated from the substrate. The substrate populated with the microorganism or the conidia is dried preferably before the separation step. After separation from the substrate, the microorganism or its organs may be dried via e. g. freeze-drying, vacuum drying or spray drying after separation.

The term spores normally includes sexually (e. g. oospores, zygospores or ascospores) and asexually (e. g. conidia and chlamydospores, but also uredospores, teleutospores and ustospores) formed spores.
The only kind of spores formed by P. lilacinum are conidia so that this form of spores is preferred herein.

In a more preferred embodiment said spores are dried spores. Formulations comprising dried spores have been shown to have a longer shelf-life so that such formulations are applicable for a longer time as compared to aqueous formulations or those comprising spores which have not been dried.

Methods for preparing dried spores are well known in the art and include fluidized bed drying, spray drying, vacuum drying and lyophilization. Conidia may be dried in 2 steps: For conidia produced by solid-state fermentation first the conidia covered culture substrate is dried before harvesting the conidia from the dried culture substrate thereby obtaining a pure conidia powder. Then the conidia powder is dried further using vacuum drying or lyophilization before formulating it according to the invention. For formulation, preferably, the polyether-modified trisiloxane and fumed silica or precipitated silica are combined in the desired ratio according to methods well-known in the art and provided e.g. in manufacturer's instructions, to form a carrier according to the invention. For example, such method of preparing a carrier includes applying high shear to disperse the fumed silica or precipitated silica in the polyether-modified trisiloxane to result in a homogenous mixture prior to mixing with the biological control agent and optionally further ingredients in the desired ratio. Preferably the polyether-modified trisiloxane is circulated from a receiving vessel via a rotor/stator machine, and the silica powder is introduced, using a feed device, into the shear zone between the slots in the rotor teeth and the stator slots, continuously or discontinuously, and with the rotor stator machine running, the feed device closes and shearing continues in such a way that the shear rate is in the range of between 1000 and 10000 s⁻¹.

In one preferred embodiment, seed is treated.

In other embodiments, treatment may be carried out in the form of any kind of soil application, such as in-furrow, by drip application, soil incorporation, drench application, sprinkler irrigation, micro injection or granule application.

The present composition may be applied to crops using any of the methods well known in the art. It may be advantageous to apply the inventive composition to the environment of the roots. This may be achieved by coating of the seeds with a composition comprising P. lilacinum, preferably spores (conidia) of P. lilacinum, so that emergence of roots results in a fungal inoculum in their environment; by dipping or spraying the root regions of seedlings or seed trays in a nursery situation, or by application of the composition at the site of planting, either in aqueous suspension or in solid form. It is particularly preferred that the inventive composition is specifically applied to the regions of the plant rhizosphere, preferably that affected by nematodes. Vegetables and other transplants can be treated just before transplanting e.g. with a soil drench.
It is preferred that application is done via drip irrigation .

In a preferred embodiment, said treatment is carried out in the soil, prior to germination of a seed and/or in the soil in contact with a root of said plant or where a plant is intended to grow.

For root development, it is most useful to apply the fungus prior to transplanting also due to characteristic as egg parasite and onwards throughout cropping duration following nematode development.

In order to achieve beneficial yield effects, one or more applications of the fungus such as sequential applications, e.g. as shown in the examples may be carried out at any point prior to sowing/planting or during growth of the plant.

In some embodiments, the treatment is carried out repeatedly.
In connection with this embodiment of the present invention, the term "repeatedly" refers to more than once. Accordingly, repeatedly may refer to at least two, at least three, at least four or even at least five applications of the fungus prior to sowing/planting and/or during germination and/or growth of the plant.
Usual application times comprise can be derived from the appended examples, however they can be generalized beyond the specific crop, kind of application and design by the skilled person.

In a preferred embodiment, the method of the invention further comprises applying, simultaneously or sequentially, at least one further plant protection agent.

Said plant protection agent may be a nematicide, an insecticide, a bactericide, a miticide, a fungicide or another agent promoting or improving plant health.

Fungicides of the following classes (1) to (15) can, if their functional groups enable this, optionally form salts with suitable bases or acids.
1) Inhibitors of the ergosterol biosynthesis, for example (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) Pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2-[4-(4-chlorophenoxy)-2-(trifluoromethyl)phenyl]-1-(1 H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chlorocyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{[rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) 2-[4-(4-chlorophenoxy)-2-(trifluoromethyl)phenyl]-1-(1H-1,2,4-triazol-1-yl)propan-2-ol, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropylcyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimidoformamide, (1.081) Mefentrifluconazole, (1.082) Ipfentrifluconazole.
2) Inhibitors of the respiratory chain at complex I or II, for example (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) Isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1 RS,4SR,9SR), (2.013) isopyrazam (mixture of syn-epimeric racemate 1RS,4SR,9RS and anti-epimeric racemate 1 RS,4SR,9SR), (2.014) isopyrazam (syn-epimeric enantiomer 1 R,4S,9R), (2.015) isopyrazam (syn-epimeric enantiomer 1 S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1 H-pyrazole-4-carboxamide, (2.023) 1,3-dimethyl-N-[(3R)-1,1,3-trimethyl-2,3-dihydro-1H-inden-4-yl]-1 H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1 H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1 H-pyrazole-4-carboxamide, (2.028) 3-(difluoromethyl)-1-methyl-N-[(3R)-1,1,3-trimethyl-2,3-dihydro-1H-inden-4-yl]-1 H-pyrazole-4-carboxamide, (2.029) 3-(difluoromethyl)-1-methyl-N-[(3S)-1,1,3-trimethyl-2,3-dihydro-1H-inden-4-yl]-1 H-pyrazole-4-carboxamide, (2.030) 3-(difluoromethyl)-N-(7-fluoro-1,1,3-trimethyl-2,3-dihydro-1H-inden-4-yl)-1-methyl-1H-pyrazole-4-carboxamide, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1 H-pyrazole-4-carboxamide, (2.033) 5,8-difluoro-N-[2-(2-fluoro-4-{[4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1 H-pyrazole-4-carboxamide, (2.037) N-(5-chloro-2-ethylbenzyl)-N-cyclopropyl-3-(difluoromethyl)-5-fluoro-1-methyl-1 H-pyrazole-4-carboxamide, (2.038) N-(5-chloro-2-isopropylbenzyl)-N-cyclopropyl-3-(difluoromethyl)-5-fluoro-1-methyl-1H-pyrazole-4-carboxamide, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1 H-pyrazole-4-carboxamide, (2.042) N-[2-chloro-6-(trifluoromethyl)benzyl]-N-cyclopropyl-3-(difluoromethyl)-5-fluoro-1-methyl-1 H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1 H-pyrazole-4-carboxamide, (2.044) N-[5-chloro-2-(trifluoromethyl)benzyl]-N-cyclopropyl-3-(difluoromethyl)-5-fluoro-1-methyl-1 H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1 H-pyrazole-4-carboxamide, (2.047) N-cyclopropyl-3-(difluoromethyl)-5-fluoro-N-(2-isopropyl-5-methylbenzyl)-1-methyl-1 H-pyrazole-4-carboxamide, (2.048) N-cyclopropyl-3-(difluoromethyl)-5-fluoro-N-(2-isopropylbenzyl)-1-methyl-1 H-pyrazole-4-carbothioamide, (2.049) N-cyclopropyl-3-(difluoromethyl)-5-fluoro-N-(2-isopropylbenzyl)-1-methyl-1 H-pyrazole-4-carboxamide, (2.050) N-cyclopropyl-3-(difluoromethyl)-5-fluoro-N-(5-fluoro-2-isopropylbenzyl)-1-methyl-1 H-pyrazole-4-carboxamide, (2.051) N-cyclopropyl-3-(difluoromethyl)-N-(2-ethyl-4,5-dimethylbenzyl)-5-fluoro-1-methyl-1 H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1 H-pyrazole-4-carboxamide, (2.054) N-cyclopropyl-N-(2-cyclopropyl-5-fluorobenzyl)-3-(difluoromethyl)-5-fluoro-1-methyl-1 H-pyrazole-4-carboxamide, (2.055) N-cyclopropyl-N-(2-cyclopropyl-5-methylbenzyl)-3-(difluoromethyl)-5-fluoro-1-methyl-1 H-pyrazole-4-carboxamide, (2.056) N-cyclopropyl-N-(2-cyclopropylbenzyl)-3-(difluoromethyl)-5-fluoro-1-methyl-1 H-pyrazole-4-carboxamide.
3) Inhibitors of the respiratory chain at complex III, for example (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) (3S,6S,7R,8R)-8-benzyl-3-[({3-[(isobutyryloxy)methoxy]-4-methoxypyridin-2-yl}carbonyl)amino]-6-methyl-4, 9-dioxo-1,5-dioxonan-7-yl 2-methylpropanoate, (3.026) 2-{2-[(2,5-dimethylphenoxy)methyl]phenyl}-2-methoxy-N-methylacetamide, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate.
4) Inhibitors of the mitosis and cell division, for example (4.001) carbendazim, (4.002) diethofencarb, (4.003) ethaboxam, (4.004) fluopicolide, (4.005) pencycuron, (4.006) thiabendazole, (4.007) thiophanate-methyl, (4.008) zoxamide, (4.009) 3-chloro-4-(2,6-difluorophenyl)-6-methyl-5-phenylpyridazine, (4.010) 3-chloro-5-(4-chlorophenyl)-4-(2,6-difluorophenyl)-6-methylpyridazine, (4.011) 3-chloro-5-(6-chloropyridin-3-yl)-6-methyl-4-(2,4,6-trifluorophenyl)pyridazine, (4.012) 4-(2-bromo-4-fluorophenyl)-N-(2,6-difluorophenyl)-1,3-dimethyl-1H-pyrazol-5-amine, (4.013) 4-(2-bromo-4-fluorophenyl)-N-(2-bromo-6-fluorophenyl)-1,3-dimethyl-1 H-pyrazol-5-amine, (4.014) 4-(2-bromo-4-fluorophenyl)-N-(2-bromophenyl)-1,3-dimethyl-1H-pyrazol-5-amine, (4.015) 4-(2-bromo-4-fluorophenyl)-N-(2-chloro-6-fluorophenyl)-1,3-dimethyl-1 H-pyrazol-5-amine, (4.016) 4-(2-bromo-4-fluorophenyl)-N-(2-chlorophenyl)-1,3-dimethyl-1 H-pyrazol-5-amine, (4.017) 4-(2-bromo-4-fluorophenyl)-N-(2-fluorophenyl)-1,3-dimethyl-1H-pyrazol-5-amine, (4.018) 4-(2-chloro-4-fluorophenyl)-N-(2,6-difluorophenyl)-1,3-dimethyl-1 H-pyrazol-5-amine, (4.019) 4-(2-chloro-4-fluorophenyl)-N-(2-chloro-6-fluorophenyl)-1,3-dimethyl-1 H-pyrazol-5-amine, (4.020) 4-(2-chloro-fluorophenyl)-N-(2-chlorophenyl)-1,3-dimethyl-1H-pyrazol-5-amine, (4.021) 4-(2-chloro-4-fluorophenyl)-N-(2-fluorophenyl)-1,3-dimethyl-1 H-pyrazol-5-amine, (4.022) 4-(4-chlorophenyl)-5-(2,6-difluorophenyl)-3,6-dimethylpyridazine, (4.023) N-(2-bromo-6-fluorophenyl)-4-(2-chloro-4-fluorophenyl)-1,3-dimethyl-1 H-pyrazol-5-amine, (4.024) N-(2-bromophenyl)-4-(2-chloro-4-fluorophenyl)-1,3-dimethyl-1H-pyrazol-5-amine, (4.025) N-(4-chloro-2,6-difluorophenyl)-4-(2-chloro-4-fluorophenyl)-1,3-dimethyl-1 H-pyrazol-5-amine.
5) Compounds capable to have a multisite action, for example (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile.
6) Compounds capable to induce a host defence, for example (6.001) acibenzolar-S-methyl, (6.002) isotianil, (6.003) probenazole, (6.004) tiadinil.
7) Inhibitors of the amino acid and/or protein biosynthesis, for example (7.001) cyprodinil, (7.002) kasugamycin, (7.003) kasugamycin hydrochloride hydrate, (7.004) oxytetracycline, (7.005) pyrimethanil, (7.006) 3-(5-fluoro-3,3,4,4-tetramethyl-3,4-dihydroisoquinolin-1-yl)quinoline.
8) Inhibitors of the ATP production, for example (8.001) silthiofam.
9) Inhibitors of the cell wall synthesis, for example (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one.
10) Inhibitors of the lipid and membrane synthesis, for example (10.001) propamocarb, (10.002) propamocarb hydrochloride, (10.003) tolclofos-methyl.
11) Inhibitors of the melanin biosynthesis, for example (11.001) tricyclazole, (11.002) 2,2,2-trifluoroethyl {3-methyl-1-[(4-methylbenzoyl)amino]butan-2-yl}carbamate.
12) Inhibitors of the nucleic acid synthesis, for example (12.001) benalaxyl, (12.002) benalaxyl-M (kiralaxyl), (12.003) metalaxyl, (12.004) metalaxyl-M (mefenoxam).
13) Inhibitors of the signal transduction, for example (13.001) fludioxonil, (13.002) iprodione, (13.003) procymidone, (13.004) proquinazid, (13.005) quinoxyfen, (13.006) vinclozolin.
14) Compounds capable to act as an uncoupler, for example (14.001) fluazinam, (14.002) meptyldinocap.
15) Further compounds, for example (15.001) Abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetyl-aluminium, (15.013) fosetyl-calcium, (15.014) fosetyl-sodium, (15.015) methyl isothiocyanate, (15.016) metrafenone, (15.017) mildiomycin, (15.018) natamycin, (15.019) nickel dimethyldithiocarbamate, (15.020) nitrothal-isopropyl, (15.021) oxamocarb, (15.022) Oxathiapiprolin, (15.023) oxyfenthiin, (15.024) pentachlorophenol and salts, (15.025) phosphorous acid and its salts, (15.026) propamocarb-fosetylate, (15.027) pyriofenone (chlazafenone), (15.028) tebufloquin, (15.029) tecloftalam, (15.030) tolnifanide, (15.031) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1 H-pyrazol-1-yl]ethanone, (15.032) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.033) 2-(6-benzylpyridin-2-yl)quinazoline, (15.034) 2,6-dimethyl-1H,5H-[1,4]dithiino[2,3-c:5,6-c']dipyrrole-1,3,5,7(2H,6H)-tetrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (15.037) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.040) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.041) 2-{2-[(7,8-difluoro-2-methylquinolin-3-yl)oxy]-6-fluorophenyl}propan-2-ol, (15.042) 2-{2-fluoro-6-[(8-fluoro-2-methylquinolin-3-yl)oxy]phenyl}propan-2-ol, (15.043) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.044) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.045) 2-phenylphenol and salts, (15.046) 3-(4,4,5-trifluoro-3,3-dimethyl-3,4-dihydroisoquinolin-1-yl)quinoline, (15.047) 3-(4,4-difluoro-3,3-dimethyl-3,4-dihydroisoquinolin-1-yl)quinoline, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butanoic acid, (15.050) 5-amino-1,3,4-thiadiazole-2-thiol, (15.051) 5-chloro-N'-phenyl-N'-(prop-2-yn-1-yl)thiophene-2-sulfonohydrazide, (15.052) 5-fluoro-2-[(4-fluorobenzyl)oxy]pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene]amino}oxy)methyl]pyridin-2-yl}carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15.062) 5-fluoro-4-imino-3-methyl-1-[(4-methylphenyl)sulfonyl]-3,4-dihydropyrimidin-2(1H)-one.

Insecticides may be of the following classes.
(1) Acetylcholinesterase (AChE) inhibitors, for example carbamates, e.g. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC and Xylylcarb or organophosphates, e.g. Acephate, Azamethiphos, Azinphos-ethyl, Azinphos-methyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl)salicylate, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Trichlorfon and Vamidothion.
(2) GABA-gated chloride channel antagonists, for example cyclodiene organochlorines, e.g. Chlordane and Endosulfan, or phenylpyrazoles (fiproles), e.g. Ethiprole and Fipronil.
(3) Sodium channel modulators / voltage-dependent sodium channel blockers, for example pyrethroids, e.g. Acrinathrin, Allethrin, d-cis-trans Allethrin, d-trans Allethrin, Bifenthrin, Bioallethrin, Bioallethrin S-cyclopentenyl isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1 R)-trans isomers], Deltamethrin, Empenthrin [(EZ)-(1R) isomers), Esfenvalerate, Etofenprox, Fenpropathrin, Fenvalerate, Flucythrinate, Flumethrin, tau-Fluvalinate, Halfenprox, Imiprothrin, Kadethrin, Momfluorothrin, Permethrin, Phenothrin [(1R)-trans isomer), Prallethrin, Pyrethrine (pyrethrum), Resmethrin, Silafluofen, Tefluthrin, Tetramethrin, Tetramethrin [(1R) isomers)], Tralomethrin and Transfluthrin or DDT or Methoxychlor.
(4) Nicotinic acetylcholine receptor (nAChR) agonists, for example neonicotinoids, e.g. Acetamiprid, Clothianidin, Dinotefuran, Imidacloprid, Nitenpyram, Thiacloprid and Thiamethoxam or Nicotine or Sulfoxaflor or Flupyridafurone.
(5) Nicotinic acetylcholine receptor (nAChR) allosteric activators, for example spinosyns, e.g. Spinetoram and Spinosad.
(6) Chloride channel activators, for example avermectins/milbemycins, e.g. Abamectin, Emamectin benzoate, Lepimectin and Milbemectin.
(7) Juvenile hormone mimics, for example juvenile hormon analogues, e.g. Hydroprene, Kinoprene and Methoprene or Fenoxycarb or Pyriproxyfen.
(8) Miscellaneous non-specific (multi-site) inhibitors, for example alkyl halides, e.g. Methyl bromide and other alkyl halides; or Chloropicrin or Sulfuryl fluoride or Borax or Tartar emetic.
(9) Selective homopteran feeding blockers, e.g. Pymetrozine or Flonicamid.
(10) Mite growth inhibitors, e.g. Clofentezine, Hexythiazox and Diflovidazin or Etoxazole.
(11) Microbial disruptors of insect midgut membranes, e.g. Bacillus thuringiensis subspecies israelensis, Bacillus sphaericus, Bacillus thuringiensis subspecies aizawai, Bacillus thuringiensis subspecies kurstaki, Bacillus thuringiensis subspecies tenebrionis and BT crop proteins: Cry1Ab, Cry1Ac, Cry1Fa, Cry2Ab, mCry3A, Cry3Ab, Cry3Bb, Cry34/35Ab1.
(12) Inhibitors of mitochondrial ATP synthase, for example Diafenthiuron or organotin miticides, e.g. Azocyclotin, Cyhexatin and Fenbutatin oxide or Propargite or Tetradifon.
(13) Uncouplers of oxidative phoshorylation via disruption of the proton gradient, for example Chlorfenapyr, DNOC and Sulfluramid.
(14) Nicotinic acetylcholine receptor (nAChR) channel blockers, for example Bensultap, Cartap hydrochloride, Thiocyclam and Thiosultap-sodium.
(15) Inhibitors of chitin biosynthesis, type 0, for example Bistrifluron, Chlorfluazuron, Diflubenzuron, Flucycloxuron, Flufenoxuron, Hexaflumuron, Lufenuron, Novaluron, Noviflumuron, Teflubenzuron and Triflumuron.
(16) Inhibitors of chitin biosynthesis, type 1, for example Buprofezin.
(17) Moulting disruptors, for example Cyromazine.
(18) Ecdysone receptor agonists, for example Chromafenozide, Halofenozide, Methoxyfenozide and Tebufenozide.
(19) Octopamine receptor agonists, for example Amitraz.
(20) Mitochondrial complex III electron transport inhibitors, for example Hydramethylnon or Acequinocyl or Fluacrypyrim.
(21) Mitochondrial complex I electron transport inhibitors, for example METI acaricides, e.g. Fenazaquin, Fenpyroximate, Pyrimidifen, Pyridaben, Tebufenpyrad and Tolfenpyrad or Rotenone (Derris).
(22) Voltage-dependent sodium channel blockers, e.g. Indoxacarb or Metaflumizone.
(23) Inhibitors of acetyl CoA carboxylase, for example tetronic and tetramic acid derivatives, e.g. Spirobudiclofen, Spirodiclofen, Spiromesifen and Spirotetramat.
(24) Mitochondrial complex IV electron transport inhibitors, for example phosphines, e.g. Aluminium phosphide, Calcium phosphide, Phosphine and Zinc phosphide or Cyanide.
(25) Mitochondrial complex II electron transport inhibitors, for example Cyenopyrafen and Cyflumetofen.
(28) Ryanodine receptor modulators, for example diamides, e.g. Chlorantraniliprole, Cyantraniliprole, Flubendiamide and Tetrachloroantraniliprole.

Further active ingredients with unknown or uncertain mode of action, for example Afidopyropen, Afoxolaner, Azadirachtin, Benclothiaz, Benzoximate, Bifenazate, Broflanilide, Bromopropylate, Chinomethionat, Cryolite, Cyclaniliprole, Cycloxaprid, Cyhalodiamide Dicloromezotiaz, Dicofol, Diflovidazin, Flometoquin, Fluazaindolizine, Fluensulfone, Flufenerim, Flufenoxystrobin, Flufiprole, Fluhexafon, Fluopyram, Fluralaner, Fluxametamide, Fufenozide, Guadipyr, Heptafluthrin, Imidaclothiz, Iprodione, Lotilaner, Meperfluthrin, Paichongding, Pyflubumide, Pyridalyl, Pyrifluquinazon, Pyriminostrobin, Sarolaner, Tetramethylfluthrin, Tetraniliprole, Tetrachlorantraniliprole, Tioxazafen, Thiofluoximate, Triflumezopyrim and lodomethane; furthermore products based on Bacillus firmus (including but not limited to strain CNCM I-1582, such as, for example,VOTiVO TM, BioNem) or one of the following known active compounds: 1-{2-fluoro-4-methyl-5-[(2,2,2-trifluorethyl)sulfinyl]phenyl}-3-(trifluoromethyl)-1H-1,2,4-triazol-5-amine (known from WO2006/043635), {1'-[(2E)-3-(4-chlorophenyl)prop-2-en-1-yl]-5-fluorospiro[indole-3,4'-piperidin]-1(2H)-yl}(2-chloropyridin-4-yl)methanone (known from WO2003/106457), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494), 3-(2,5-dimethylphenyl)-4-hydroxy-8-methoxy-1,8-diazaspiro[4.5]dec-3-en-2-one (known from WO2009/049851), 3-(2,5-dimethylphenyl)-8-methoxy-2-oxo-1,8-diazaspiro[4.5]dec-3-en-4-yl ethyl carbonate (known from WO2009/049851), 4-(but-2-yn-1-yloxy)-6-(3,5-dimethylpiperidin-1-yl)-5-fluoropyrimidine (known from WO2004/099160), 4-(but-2-yn-1-yloxy)-6-(3-chlorophenyl)pyrimidine (known from WO2003/076415), PF1364 (CAS-Reg.No. 1204776-60-2), methyl 2-[2-({[3-bromo-1-(3-chloropyridin-2-yl)-1H-pyrazol-5-yl]carbonyl}amino)-5-chloro-3-methylbenzoyl]-2-methylhydrazinecarboxylate (known from WO2005/085216), methyl 2-[2-({[3-bromo-1-(3-chloropyridin-2-yl)-1H-pyrazol-5-yl]carbonyl}amino)-5-cyano-3-methylbenzoyl]-2-ethylhydrazinecarboxylate (known from WO2005/085216), methyl 2-[2-({[3-bromo-1-(3-chloropyridin-2-yl)-1H-pyrazol-5-yl]carbonyl}amino)-5-cyano-3-methylbenzoyl]-2-methylhydrazinecarboxylate (known from WO2005/085216), methyl 2-[3,5-dibromo-2-({[3-bromo-1-(3-chloropyridin-2-yl)-1H-pyrazol-5-yl]carbonyl}amino)benzoyl]-2-ethylhydrazinecarboxylate (known from WO2005/085216), , N-[2-(5-amino-1,3,4-thiadiazol-2-yl)-4-chloro-6-methylphenyl]-3-bromo-1-(3-chloropyridin-2-yl)-1H-pyrazole-5-carboxamide (known from CN102057925), 8-chloro-N-[(2-chloro-5-methoxyphenyl)sulfonyl]-6-(trifluoromethyl)imidazo[1,2-a]pyridine-2-carboxamide (known from WO2009/080250), N-[(2E)-1-[(6-chloropyridin-3-yl)methyl]pyridin-2(1H)-ylidene]-2,2,2-trifluoroacetamide (known from WO2012/029672), 1-[(2-chloro-1,3-thiazol-5-yl)methyl]-4-oxo-3-phenyl-4H-pyrido[1,2-a]pyrimidin-1-ium-2-olate (known from WO2009/099929), 1-[(6-chloropyridin-3-yl)methyl]-4-oxo-3-phenyl-4H-pyrido[1,2-a]pyrimidin-1-ium-2-olate (known from WO2009/099929), 4-(3-f2,6-dichloro-4-[(3,3-dichloroprop-2-en-1-yl)oxy]phenoxylpropoxy)-2-methoxy-6-(trifluoromethyl)pyrimidine (known from CN101337940), N-[2-(tert-butylcarbamoyl)-4-chloro-6-methylphenyl]-1-(3-chloropyridin-2-yl)-3-(fluoromethoxy)-1 H-pyrazole-5-carboxamide (known from WO2008/134969), butyl [2-(2,4-dichlorophenyl)-3-oxo-4-oxaspiro[4.5]dec-1-en-1-yl] carbonate (known from CN 102060818), , 3E)-3-[1-[(6-chloro-3-pyridyl)methyl]-2-pyridylidene]-1,1,1-trifluoro-propan-2-one (known from WO2013/144213), N-(methylsulfonyl)-6-[2-(pyridin-3-yl)-1,3-thiazol-5-yl]pyridine-2-carboxamide (known from WO2012/000896), N-[3-(benzylcarbamoyl)-4-chlorophenyl]-1-methyl-3-(pentafluoroethyl)-4-(trifluoromethyl)-1 H-pyrazole-5-carboxamide (known from WO2010/051926), 5-bromo-4-chloro-N-[4-chloro-2-methyl-6-(methylcarbamoyl)phenyl]-2-(3-chloro-2-pyridyl)pyrazole-3-carboxamido (known from CN103232431), ), Tioxazafen, 4-[5-(3,5-dichlorophenyl)-4,5-dihydro-5-(trifluoromethyl)-3-isoxazolyl]-2-methyl-*N*-(*cis*-1-oxido-3-thietanyl)-benzamide, 4-[5-(3,5-dichlorophenyl)-4,5-dihydro-5-(trifluoromethyl)-3-isoxazolyl]-2-methyl-N-(*trans*-1-oxido-3-thietanyl)-benzamide and 4-[(5*S*)-5-(3,5-dichlorophenyl)-4,5-dihydro-5-(trifluoromethyl)-3-isoxazolyl]-2-methyl-*N*-(*cis*-1-oxido-3-thietanyl)benzamide (known from WO 2013050317 A1), *N*-[3-chloro-1-(3-pyridinyl)-1*H*-pyrazol-4-yl]-*N*-ethyl-3-[(3,3,3-trifluoropropyl)sulfinyl]-propanamide, (+)-*N*-[3-chloro-1-(3-pyridinyl)-1*H*-pyrazol-4-yl]-*N*-ethyl-3-[(3, 3,3-trifluoropropyl)sulfinyl]-propanamide and (-)-*N*-[3-chloro-1-(3-pyridinyl)-1*H*-pyrazol-4-yl]-*N-*ethyl-3-[(3,3,3-trifluoropropyl)sulfinyl]-propanamide (known from WO 2013162715 A2, WO 2013162716 A2, US 20140213448 A1), 5-[[(2E)-3-chloro-2-propen-1-yl]amino]-1-[2,6-dichloro-4-(trifluoromethyl)phenyl]-4-[(trifluoromethyl)sulfinyl]-1*H*-pyrazole-3-carbonitrile (known from CN 101337937 A), 3-bromo-*N*-[4-chloro-2-methyl-6-[(methylamino)thioxomethyl]phenyl]-1-(3-chloro-2-pyridinyl)-1*H*-pyrazole-5-carboxamide, (Liudaibenjiaxuanan, known from CN 103109816 A); *N*-[4-chloro-2-[[(1,1-dimethylethyl)amino]carbonyl]-6-methylphenyl]-1-(3-chloro-2-pyridinyl)-3-(fluoromethoxy)-1*H*-Pyrazole-5-carboxamide (known from WO 2012034403 A1), *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide (known from WO 2011085575 A1), 4-[3-[2,6-dichloro-4-[(3,3-dichloro-2-propen-1-yl)oxy]phenoxy]propoxy]-2-methoxy-6-(trifluoromethyl)-pyrimidine (known from CN 101337940 A); (2E)- and 2(Z)-2-[2-(4-cyanophenyl)-1-[3-(trifluoromethyl)phenyl]ethylidene]-*N*-[4-(difluoromethoxy)phenyl]-hydrazinecarboxamide (known from CN 101715774 A); 3-(2,2-dichloroethenyl)-2,2-dimethyl-4-(1*H*-benzimidazol-2-yl)phenyl-cyclopropanecarboxylic acid ester (known from CN 103524422 A); (4a*S*)-7-chloro-2,5-dihydro-2-[[(methoxycarbonyl)[4-[(trifluoromethyl)thio]phenyl]amino]carbonyl]-indeno[1,2-e][1,3,4]oxadiazine-4a(3H)-carboxylic acid methyl ester (known from CN 102391261 A).

Nematicides comprise dichlorpropene, metam sodium, metam potassium, chloropicrin, oxamyl, carbofuran, cleothocarb, fosthiazate, aldicarb, aldoxycarb, fenamiphos, cadusaphos, abamectin, cyanamide, dazomet, methyl-bromide, terbufos, ethoprophos, ethylene-dibromide, phorate, methyl isothiocyanate, thiodicarb, sodium tetrathiocarbonate, tioxazafen, iprodione, fluensulfone, imicyafos, mimethyl-disulfide, spirotetramate, fluazaindolizine, ebufos, isazafos, fensulfothion, thionazin and fluopyram.

The term "at least one" indicates that in any case one further plant protection agent is applied in addition to Purpureocillium lilacinum or its spores. However, more than one such as (at least) two, (at least) three, (at least) four, (at least) 5 or even more further plant protection agents may be applied according to the present embodiment.

In another preferred embodiment, said at least one further plant protection agent is selected from the group consisting of fluopyram, B. firmus strain CNCM I-1582 (also known as Votivo™), B. subtilis, in particular strain QST713 (disclosed in e.g. U.S. Patent Nos. 6,060,051; 6,103,228; 6,291,426; 6,417,163; and 6,638,910), abamectin, aldicarb, aldoxycarb, carbofuran, cleothocarb, fenamiphos, fluensulfone, fluazaindolizine, oxamyl, fosthiazate, tioxazafen, iprodione, ethoprophos, flupyradifurone, tetraniliprole, rynaxypyr, cyazypyr, thiomethoxam, clothianidin, imidacloprid, thiacloprid, acetamiprid, sulfoxaflor, thiodicarb, and a fumigant, in particular metam sodium, 1,3-dichlorpropene. Plant protection agents to be combined with P. lilacinum which are biological control agents comprise microorganisms or spores thereof of e.g. Trichoderma harzianum strain T-22, but also beneficial nematodes such as Steinernema feltiae, Heterorhabditis bacteriophora, and Steinernema carpocapsae.

Fluopyram also shows a certain plant growth promoting effect (see. e.g. Example 1). Accordingly, in order to achieve an even better PGP or plant health effect, it is particularly advantageous to sequentially apply P. lilacinum and fluopyram. Here, it is most useful to have P. lilacinum applied as last PGP or plant health promoting agent, also in order to reduce residues in the harvested crop. This does, however, not exclude that P. lilacinum may also and in addition be applied prior to application of fluopyram.

If needed, P. lilacinus may also be applied together with certain other fungicides where compatibility has been shown, such as fosetyl-Al, trifloxystrobin, metalaxyl, pentachloronitrobenzene, fluxapyroxad, propamocarb and triadimenol. Compatible insecticides and/or nematicides comprise carbofuran, cadusafos, fenamiphos, furfural, terbufos, tioxazafen, fluazaindolizine, fosthiazate, flupyradifurone, imidacloprid, bifenthrin.

Besides biological and chemical plant protection agents, technical methods are commonly applied by farmers to control effectively soilborne pathogens as well as nematodes. Solarization by using radiant heat from the sun trapped by clear polyethylene mulch or tarp throughout several weeks increases soil temperature thus act as the lethal agent, respectively. All such methods may also be applied in conjunction with the present invention.

The present invention may be applied to any agricultural plant. Plants are understood here to mean all plants and plant populations such as desired wild plants or crop plants (including naturally occurring crop plants). Crop plants may be plants which can be obtained by conventional breeding and optimization methods which can be assisted or supplemented by one or more biotechnological methods such as by use of double haploids, protoplast fusion, random and directed mutagenesis, molecular or genetic markers or by bioengineering and genetic engineering methods or combinations of these methods, including transgenic plants, plants modified by directed genome engineering such as by the use os zinc finger nucleases, meganucleases, TALE nucleases or CRISPR/Cas9 and including the plant cultivars which can or cannot be protected by plant breeders' certificates.

The crops to be treated, which have only been described in a general manner, are differentiated and specified below and include vegetables, perennial crops, ornamentals, spices and cereals. Thus, with regard to use, vegetables are understood to mean, for example, fruit vegetables and flower-heads as vegetables, for example carrots, bell peppers, chilli peppers, tomatoes, aubergines, cucumbers, cucurbits, courgettes, broad beans, runner beans, bush beans, peas, artichokes, maize; but also leafy vegetables, for example lettuce, chicory, endives, cress, rocket salad, field salad, iceberg lettuce, leek, spinach, swiss chard; additionally tuber vegetables, root vegetables and stem vegetables, for example celeriac, beetroot, carrots, garden radish, horseradish, salsify, asparagus, table beet, palm shoots, bamboo shoots, and also bulb vegetables, for example onions, leek, fennel, garlic; additionally brassica vegetables, such as cauliflower, broccoli, kohlrabi, red cabbage, white cabbage, green cabbage, savoy cabbage, brussels sprouts, chinese cabbage.
In this regard, perennial crops are understood to mean citrus fruit, for example oranges, grapefruit, mandarins, lemons, limes, bitter oranges, kumquats, satsumas;
but also pome fruit, for example apples, pears and quince, and stone fruit, for example peaches, nectarines, cherries, plums, common plums, apricots; additionally grapevine, hops, olives, tea, soya, oilseed rape, cotton, sugar cane, beet, potatoes, tobacco and tropical crops, for example mangoes, papayas, figs, pineapples, dates,
bananas, durians, kakis, coconuts, cacao, coffee, avocados, lychees, maracujas, guavas, and also almonds and nuts, for example hazelnuts, walnuts, pistachios, cashew nuts, brazil nuts, pecan nuts, butter nuts, chestnuts, hickory nuts, macadamia nuts, peanuts, and additionally also soft fruit, for example blackcurrants,
gooseberries, raspberries, blackberries, blueberries, strawberries, red bilberries, kiwis and cranberries.
Ornamental plants are understood to mean annual and perennial plants, for example flowers to be cut from plants, for example roses, carnations, gerbera, lilies, marguerites, chrysanthemums, tulips, daffodils, anemones, poppies, amaryllis, dahlias, azaleas, malves, but also, for example, bedding plants, potted plants and shrubs, for example roses, tagetes, pansies, geraniums, fuchsias, hibiscus, chrysanthemums, busy lizzies, cyclamen, african violets, sunflowers, begonias, in ornamental lawns, in golflawns, but also in cereals such as barley, wheat, rye, triticale, oats, in rice, in millet, in maize, additionally, for example, bushes and conifers, for example fig trees, rhododendron, spruce trees, fir trees, pine trees, yew trees, juniper trees, stone pines, rose bays. Spices are understood to mean annual and perennial plants, for example aniseed, chilli pepper, bell pepper, pepper, vanilla, marjoram, thyme, cloves, juniper berries, cinnamon, tarragon, coriander, saffron, ginger.

Preferred plants are selected from the group consisting of soybean, corn, wheat, triticale, barley, oat, rye, rape, millet, rice, sunflower, cotton, sugar beet, pome fruit, stone fruit, citrus, banana, strawberry, blueberry, almond, grape, mango, papaya, peanut, potato, tomato, pepper, cucurbit, cucumber, melon, watermelon, garlic, onion, broccoli, carrot, cabbage, bean, dry bean, canola, pea, lentil, alfalfa, trefoil, clover, flax, elephant grass, grass, lettuce, sugarcane, tea, tobacco and coffee, nuts; each in its natural or genetically modified form.

In a further preferred embodiment, transgenic plants, and plant cultivars which have been obtained by genetic engineering methods, if appropriate in combination with conventional methods (Genetically Modified Organisms), and parts
thereof are treated.
The method according to the invention can be used in the treatment of genetically modified organisms (GMOs), e.g. plants or seeds. Genetically modified plants (or transgenic plants) are plants of which a heterologous gene has been stably integrated into the genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using, for example, antisense technology, cosuppression technology or RNA interference-RNAi-technology). A heterologous gene that is located in the genome is also called a transgene. A transgene that is defined by its particular location in the plant genome is called a transformation event or transgenic event. Exemplary genetically modified plants are disclosed e.g. in US2014/005047 in a non-limiting fashion.

It is more preferred that the agricultural plant is tomato,, cucumber, corn, soy, ornamentals, coffee, carrots, potato or grapevine. It is even more preferred that the agricultural plant is selected from tomato, cucumber and corn.

Examples of typical formulations include water-soluble liquids (SL), emulsifiable concentrates (EC), emulsions in water (EW), suspension concentrates (SC, SE, FS, OD), water-dispersible granules (WG), granules (GR) and capsule concentrates (CS); these and other possible types of formulation are described, for example, by Crop Life International and in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576. The formulations may comprise active agrochemical compounds other than one or more active compounds of the invention.
The formulations or application forms in question preferably comprise auxiliaries, such as extenders, solvents, spontaneity promoters, carriers, emulsifiers, dispersants, frost protectants, biocides, thickeners and/or other auxiliaries, such as adjuvants, for example. An adjuvant in this context is a component which enhances the biological effect of the formulation, without the component itself having a biological effect. Examples of adjuvants are agents which promote the retention, spreading, attachment to the leaf surface, or penetration.
These formulations are produced in a known manner, for example by mixing the active compounds with auxiliaries such as, for example, extenders, solvents and/or solid carriers and/or further auxiliaries, such as, for example, surfactants. The formulations are prepared either in suitable plants or else before or during the application.
Suitable for use as auxiliaries are substances which are suitable for imparting to the formulation of the active compound or the application forms prepared from these formulations (such as, e.g., usable crop protection agents, such as spray liquors or seed dressings) particular properties such as certain physical, technical and/or biological properties.
Suitable extenders are, for example, water, polar and nonpolar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulphones and sulphoxides (such as dimethyl sulphoxide).
If the extender used is water, it is also possible to employ, for example, organic solvents as auxiliary solvents. Essentially, suitable liquid solvents are: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethylformamide, dimethylacetamide and dimethyl sulphoxide, and also water. Preferred auxiliary solvents are selected from the group consisting of acetone and N,N'-dimethylacetamide. In principle it is possible to use all suitable and compatible solvents. Suitable solvents are, for example, aromatic hydrocarbons, such as xylene, toluene or alkylnaphthalenes, for example, chlorinated aromatic or aliphatic hydrocarbons, such as chlorobenzene, chloroethylene or methylene chloride, for example, aliphatic hydrocarbons, such as cyclohexane, for example, paraffins, petroleum fractions, mineral and vegetable oils, alcohols, such as methanol, ethanol, isopropanol, butanol or glycol, for example, and also their ethers and esters, ketones such as acetone, methyl ethyl ketone, methyl isobutyl ketone or cyclohexanone, for example, strongly polar solvents, such as dimethyl sulphoxide, polyether-modified trisiloxanes and water.
All suitable and compatible carriers may in principle be used. Suitable carriers are in particular: for example, ammonium salts and ground natural minerals such as kaolins, clays, talc, chalk, quartz, attapulgite, montmorillonite or diatomaceous earth, and ground synthetic minerals, such as finely divided silica, alumina and natural or synthetic silicates, resins, waxes and/or solid fertilizers. Mixtures of such carriers may likewise be used. Carriers suitable for granules include the following: for example, crushed and fractionated natural minerals such as calcite, marble, pumice, sepiolite, dolomite, and also synthetic granules of inorganic and organic meals, and also granules of organic material such as sawdust, paper, coconut shells, maize cobs and tobacco stalks; or also compounds likes sugars.

Liquefied gaseous extenders or solvents may also be used. Particularly suitable are those extenders or carriers which at standard temperature and under standard pressure are gaseous, examples being aerosol propellants, such as halogenated hydrocarbons, and also butane, propane, nitrogen and carbon dioxide.
Examples of emulsifiers and/or foam-formers, dispersants or wetting agents having ionic or nonionic properties, or mixtures of these surface-active substances, are salts of polyacrylic acid, salts of lignosulphonic acid, salts of phenolsulphonic acid or naphthalenesulphonic acid, polycondensates of ethylene oxide with fatty alcohols or with fatty acids or with fatty amines, with substituted phenols (preferably alkylphenols or arylphenols), salts of sulphosuccinic esters, taurine derivatives (preferably alkyltaurates), phosphoric esters of polyethoxylated alcohols or phenols, fatty acid esters of polyols, and derivatives of the compounds containing sulphates, sulphonates and phosphates, examples being alkylaryl polyglycol ethers, alkylsulphonates, alkyl sulphates, arylsulphonates, protein hydrolysates, lignin-sulphite waste liquors and methylcellulose. The presence of a surface-active substance is advantageous if one of the active compounds and/or one of the inert carriers is not soluble in water and if application takes place in water. Preferred emulsifiers are alkylaryl polyglycol ethers.
Further auxiliaries that may be present in the formulations and in the application forms derived from them include colorants such as inorganic pigments, examples being iron oxide, titanium oxide, Prussian Blue, and organic dyes, such as alizarin dyes, azo dyes and metal phthalocyanine dyes, and nutrients and trace nutrients, such as salts of iron, manganese, boron, copper, cobalt, molybdenum and zinc.
Stabilizers, such as low-temperature stabilizers, preservatives, antioxidants, light stabilizers or other agents which improve chemical and/or physical stability may also be present. Additionally present may be foam-formers or defoamers.
Furthermore, the formulations and application forms derived from them may also comprise, as additional auxiliaries, stickers such as carboxymethylcellulose, natural and synthetic polymers in powder, granule or latex form, such as gum arabic, polyvinyl alcohol, polyvinyl acetate, and also natural phospholipids, such as cephalins and lecithins, and synthetic phospholipids. Further possible auxiliaries include mineral and vegetable oils.
There may possibly be further auxiliaries present in the formulations and the application forms derived from them. Examples of such additives include fragrances, protective colloids, binders, adhesives, thickeners, thixotropic substances, penetrants, retention promoters, stabilizers, sequestrants, complexing agents, humectants and spreaders. Generally speaking, the active compounds may be combined with any solid or liquid additive commonly used for formulation purposes.

Suitable retention promoters include all those substances which reduce the dynamic surface tension, such as dioctyl sulphosuccinate, or increase the viscoelasticity, such as hydroxypropylguar polymers, for example.
Suitable penetrants in the present context include all those substances which are typically used in order to enhance the penetration of active agrochemical compounds into plants. Penetrants in this context are defined in that, from the (generally aqueous) application liquor and/or from the spray coating, they are able to penetrate the cuticle of the plant and thereby increase the mobility of the active compounds in the cuticle. This property can be determined using the method described in the literature (Baur et al., 1997, Pesticide Science 51, 131-152). Examples include alcohol alkoxylates such as coconut fatty ethoxylate (10) or isotridecyl ethoxylate (12), fatty acid esters such as rapeseed or soybean oil methyl esters, fatty amine alkoxylates such as tallowamine ethoxylate (15), or ammonium and/or phosphonium salts such as ammonium sulphate or diammonium hydrogen phosphate, for example.
The formulations preferably comprise between 0.00000001% and 98% by weight of active compound or, with particular preference, between 0.01 % and 95% by weight of active compound, more preferably between 0.5% and 90% by weight of active compound, based on the weight of the formulation. The content of the active compound is defined as the sum of the at least one biological control agent and the at least one fungicide (I).

The composition to be applied in connection with the present invention may comprise compatible adjuvants such as Imbirex, BU EXP 1136, Afinity, LI 700 PCP 230026, Irrig Aid Gold, PeneCal, Neowett, Quadra Teck, Respond 3, Trifolio S Forte, Silwet Copolymer 480, Silwet Gold, Tween 20, Break Thru 240 (0.05%), Break Thru 240 (0.2%), Silwet L-77 Copolymer and Biolink.

In a preferred embodiment, said composition further comprises at least 75% polyether-modified trisiloxane. Such formulations are disclosed e.g. in WO2012/163322. In the course of the present invention, it has surprisingly been found that a formulation comprising at least 75% polyether-modified trisiloxane has an even bigger effect on certain plant growth or plant health properties, see Example 3.

In a more preferred embodiment, said polyether-modified trisiloxane is of formula I 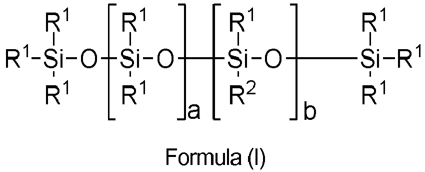 where
- R¹: represents independent from each other identical or different hydrocarbyl radicals having 1-8 carbon atoms, preferred methyl-, ethyl-, propyl- and phenyl radicals, particularly preferred are methyl radicals.
- a: = 0 to 1, preferred 0 to 0.5, particularly preferred 0,
- b: = 0.8 to 2, preferred 1 to 1.2, particularly preferred 1,
in which: a + b < 4 and b>a, preferred a + b <3 and particularly preferred a + b <2.
- R²: represents independent from each other identical or different polyether radicals of general formula (II)

-R³O[CH₂CH₂O]_{c}[CH₂CH(CH₃)O]_{d}[CHR⁴CHR⁴O]ₑR⁵ Formula (II)
- R³: = independent from each other identical or different, bivalent hydrocarbyl radicals having 2 - 8 carbon atoms, which are optionally interrupted by oxygen atoms, preferred rest is the general formula (III) where n = 2 - 8, particularly preferred -CH₂-CH₂-CH₂-, 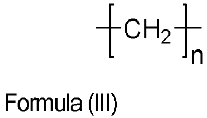
- R⁴: = independent from each other identical or different hydrocarbyl radicals having 1-12 carbon atoms or hydrogen radical, preferably a methyl-, ethyl-, phenyl- or a hydrogen radical.
- R⁵: = independent from each other identical or different hydrocarbyl radicals having 1-16 carbon atoms, which are optionally contain urethane functions, carbonyl functions or carboxylic acid ester functions, or hydrogen radical, preferred methyl or H, particularly preferred H.
- C: = 0 to 40, preferred 1 to 15, particularly preferred 2 to 10
- d: = 0 to 40, preferred 0 to 10, particularly preferred 1 to 5
- e: = 0 to 10, preferred 0 to 5, particularly preferred 0,
in which c + d + e > 3

The polyether-modified trisiloxanes described above can be prepared by methods well known to the practioner by hydrosilylation reaction of a Si-H containing siloxane and unsaturated polyoxyalkylene derivatives, such as an allyl derivative, in the presence of a platinum catalyst. The reaction and the catalysts employed have been described for example, by W. Noll in "Chemie und Technology der Silicone", 2nd ed., Verlag Chemie, Weinheim (1968), by B. Marciniec in "Appl. Homogeneous Catal. Organomet. Compd. 1996, 1, 487). It is common knowledge that the hydrosilylation products of SiH-containing siloxanes with unsaturated polyoxyalkylene derivatives can contain excess unsaturated polyoxyalkylene derivative.

Examples of water soluble or self-emulsifyable polyether-modified (PE/PP or block-CoPo PEPP) trisiloxanes include but are not limited to those described by CAS-No 27306-78-1 (e.g. Silwet L77 from MOMENTIVE), CAS-No 134180-76-0 (e.g. BreakThru S233 or BreakThru S240 from Evonik), CAS-No 67674-67-3 (e.g Silwet 408 from WACKER), other BreakThru-types, and other Silwet-types.

Preferred polyether-modified trisiloxanes include those described by CAS-No 134180-76-0, in particular Break-Thru S240, having the chemical denomination oxirane, mono(3-(1,3,3,3-tetramethyl-1-((trimethylsilyl)oxy)disiloxanyl)propyl)ether.

A formulation according to the invention comprising a polyether-modified trisiloxane, in addition to the advantages described above reduced surface tension even in high dilutions, e. g. for soil applications, since such formulation contains a high concentration of polyether-modified trisiloxane being a surfactant. This may promote the advantageous PGP or plant health promoting properties of P. lilacinum.

In a more preferred embodiment said polyether-modified trisiloxane is BreakThru S240.

In another preferred embodiment, said composition further comprises up to 9% fumed silica.

Fumed silica, also known as pyrogenic silica, either hydrophilic or hydrophobic, usually is composed of amorphous silica fused into branched, chainlike, three-dimensional secondary particles which then agglomerate into tertiary particles. The resulting powder has an extremely low bulk density and high surface area. Both hydrophilic and hydrophobic fumed silica can be used in the present invention

Fumed silica usually has a very strong thickening effect. The primary particle size is ca. 5-50 nm. The particles are non-porous and have a surface area of ca. 50-600 m²/g.
Hydrophilic fumed silica is made from flame pyrolysis of silicon tetrachloride or from quartz sand vaporized in a 3000°C electric arc. Major global producers are Evonik Industries, tradename AEROSIL®); Cabot Corporation, tradename Cab-O-Sil®; Wacker Chemie, HDK product range; and OCI, tradename Konasil®.
Hydrophilic fumed silica can be hydrophobized by further treatment with reactive silicium-containing agents in order to modify the physicochemical properties of the silica. Typically hydrophobisation takes place by treatment of a hydrophilic fumed silica with agents like hexaalkyldisilanes (e.g. ((CH₃)₃Si)₂), trialkylsilylchlorides (e.g. (CH₃)₃SiCl) or dialkyldichlorsilanes (e.g. (CH₃)₂SiCl₂). Hydrophobized fumed silica is available e.g. from Evonik Industries (AEROSIL R-types), and Cabot (Cab-O-Sil).
Best results are obtained using a hydrophilic fumed silica having a BET surface area of 150 to 350 m²/g, e. g. 150, 200, 250, 300 or 350.

In a more preferred embodiment said fumed silica is Aerosil.

In connection with the present invention, the formulation described above further comprises spores of P. lilacinum, polyether-modified trisiloxane and fumed silica and only traces of other ingredients and performs even better than a WG formulation.
For the avoidance of doubt, all compositions used in the present invention and comprising P.lilacinum were shown to have the claimed effect. However, the above formulation showed an even bigger effect.

The final dosage of infective propagules of *Paecilomyces lilacinus* starin 251 is normally in the order of between 1 x about 10⁴ and about 1 x 10⁸, preferably between about 1 x 10⁵ and about 2 x 10¹, more preferably between 1x10⁵ and 5x10⁶, such as 2x10⁵, 5x10⁵, 1x10⁶ or 2x10⁶ spores per gram of soil for nursery applications and for field applications.

The present invention furthermore relates to the use of a composition comprising the fungus Purpureocillium lilacinum or spores thereof for promoting or improving plant health or plant growth promotion.

All embodiments as described for the method of the invention may as well be applied in the use of the present invention.

The figures show:
Figure 1A: Nematicidal activity of *Purpureocillium lilacinum* strain 251 and fluopyram against *Meloidogyne incongita.* Mean of 3 replicates + standard error (SE).
Figure 1B: Plant health activity of *Purpureocillium lilacinum* strain 251 and fluopyram in presence of *Meloidogyne incongita.* Mean of 3 replicates + standard error (SE). Significant differences (p≤0.05) are indicated by asterisks.
Figure 2A: Total root surface area of tomato treated with a liquid formulation of P. lilacinum strain 251 (BioAct liquid); 4 reps per treatment. Run unpaired "T Test," confidence level of 95%, examining threshold of significance, p≤0.05.
Figure 2B: Whole plant biomass of tomato treated with a liquid formulation of P. lilacinum strain 251 (BioAct liquid); Statistically significant with a p-value of 0.0249, t value of 2.973 and df=6 degrees of freedom).
Figure 2C: Nematode efficacy showing average number of egg masses. Statistically significant with a P<0.0001, t value of 13.36, df=6.
Figure 3A: Whole plant biomass of tomato treated with different formulations of P. lilacinum strain 2514 reps per treatment; One-Way analysis of variance (ANOVA).
Figures 3B, 3C, 3D: Average root weight, total root surface area (cm²) (p-value of 0.0270) and M. javanica egg masses (p-value of 0.0007) for the treatments shown in 3A.
Figure 4: Leaf surface area of tomatos treated with formulations of P. lilacinum strain 251 as compared to other fungal strains.
Figure 5A: Fresh whole plant biomass of corn plants treated with a liquid formulation of P. lilacinum strain 251; *p=0.05 or less; **p=0.01 or less.
Figure 5B and 5C: Root length (%B) and total number of tip, forks and crossings (TFC) of the trials shown in Figure 5A.
Figure 6: Trial tomato treatment with a liquid formulation of P. lilacinum strain 251 in 80% sand and 20% Sunshine #3. A: Gall rating; B: Egg count; C: dry shoot weight; D: dry root weight; E: total vegetative weight.
Figure 7: Trial tomato treatment with a liquid formulation of P. lilacinum strain 251 in 80% Profile and 20% Sunshine #3. A: Gall rating; B: total fruit weight; C: dry shoot weight; D: total vegetative weight.
Figure 8: Trial cucumber treatment with a liquid formulation of P. lilacinum strain 251 in 80% sand and 20% Sunshine #3. A: Gall rating; B: Egg count; C: dry root weight.
Figure 9: Total fruit weight from trial tomato treatment with a liquid formulation of P. lilacinum strain 251 in 80% Profile and 20% Sunshine #3.
Figure 10: Efficacy (bars) and yield (dots) of trials with PL251 in cucumber (10A) and tomato (10B).

The examples further illustrate the invention in a non-limiting fashion.

### Example 1:

### Drench application of Purpureocillium lilacinum strain 251 (PL 251) in tomato

To prepare a suitable dosage form the formulated product PL251 (liquid formulation of P. lilacinum comprising BreakThru S240 and Aerosil) is diluted with water to the desired concentration.

A quantity of 5,000 cm³ of sandy loam soil_{[KH1]}, pH 6.8 per pot is mixed with 150,000 infective units (mixed population of eggs and juveniles) of the Southern Root Knot Nematode (*Meloidogyne incognita*). The desired concentration of *Purpureocillium lilacinum* strain 251 is drenched in 400 mL of solution (application A) to obtain 80 % field capacity. Pots are incubated at 25°C until transplanting of tomato seedlings (*Lycopersicon lycopersicum*) at 7 days after drench application A. At the day of transplanting a second drench application (application B) is carried out with 400 mL of solution.

After transplanting of tomato seedlings several post-plant application patterns are tested using 400 mL of solution per application (Table A).

In addition, 10 mg of the nematicide fluopyram (Velum® Prime, suspension concentrate SC 400) is applied at transplanting and used as a chemical reference. The non-treated control (UTC) is drenched with 400 mL of water at each application. The experiment is kept for 7 weeks after transplanting at 25°C.

**Table A: Purpureocillium lilacinum strain 251 drench test in tomato**

| Application | A | B | C | D |
|---|---|---|---|---|
| Application timing | 7 d prior to transplanting | at transplanting | 4 weeks after transplanting | 6 weeks after transplanting |
| Treatment | | | | |
| UTC | water | water | water | water |
| 1 | 5.5x10⁵ viable spores per cm³ substrate | 5.5x10⁵ viable spores per cm³ substrate | 5.5x10⁵ viable spores per cm³ substrate | water |
| 2 | 5.5x10⁵ viable spores per cm³ substrate | 5.5x10⁵ viable spores per cm³ substrate | water | 5.5x10⁵ viable spores per cm³ substrate |
| 3 | 5.5x10⁵ viable spores per cm³ substrate | 5.5x10⁵ viable spores per cm³ substrate | 5.5x10⁵ viable spores per cm³ substrate | 5.5x10⁵ viable spores per cm³ substrate |
| 4 | water | 10 mg fluopyram / plant | water | water |

After the specified period the nematicidal activity is determined on the basis of the percentage of gall reduction. 100 % means that no galls were found; 0 % means that the number of galls found on the roots of treated plants was equal to that in untreated control plants. Moreover the shoot biomass is also determined to assess the overall plant health status.

The experimental set up is fully randomized and comprised three replicates per treatment. One-way analysis of variance (ANOVA) is carried out for shoot biomass using a threshold for significance of p≤0.05 and a Bonferroni posttest to compare all treatments against the UTC.

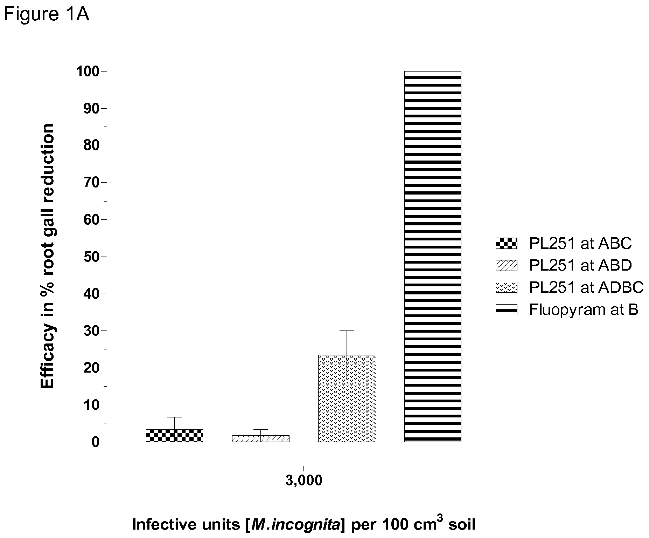

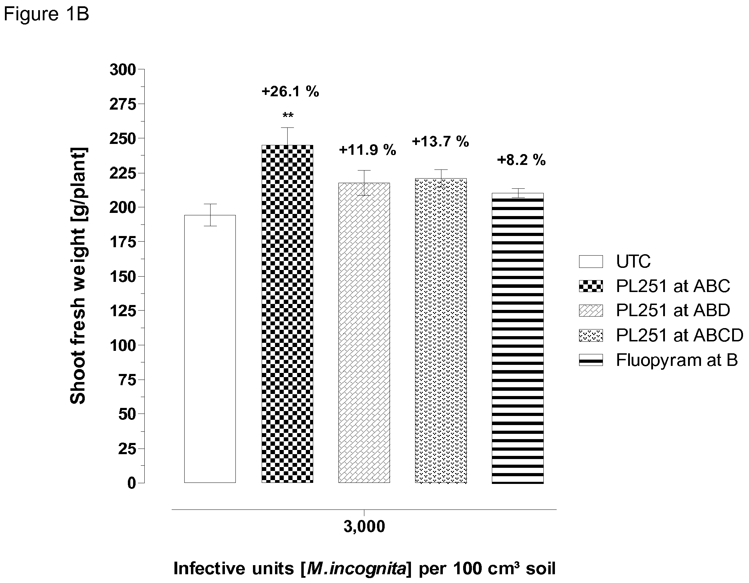

The bionematcide PL251 shows no to only weak nematicidal activity at a rate of 5.5x10⁵ spores per cm³ of substrate and at the used nematode pressure of 3,000 *Meloidogyne incognita* per 100 cm³ of soil This finding is independent of the application patterns tested in this experiment (Fig. 1A). In contrast, the chemical nematicide fluopyram shows excellent biocontrol activity at 10 mg per plant.

The lower performance of PL251 is likely because of the high nematode pressure used in the present study. Kiewnick et al. 2011¹ reported approx. 50 % biocontrol efficacy at 400 infective units of *Meloidogyne incognita* per 100 cm³ of soil. At a higher nematode density of 1,600 infective units, only 22 % biocontrol were reported. However, the nematode pressure used in the present study (3,000 infective units per 100 cm³ soil) was considerably higher compared to that of Kiewnick et al. 2011.
¹ Kiewnick, S.; Neumann, S.; Sikora, R.A.; Frey, J.E. 2011: Effect of Meloidogyne incognita Inoculum Density and Application Rate of Paecilomyces lilacinus Strain 251 on Biocontrol Efficacy and Colonization of Egg Masses Analyzed by Real-Time Quantitative PCR. Phytopathology, Vol. 101, No. 1, 2011

Despite its lower nematicidal performance PL251 improves tomato shoot fresh weight by 12-26 % depending on the post-plant application pattern. This effect is remarkable since the chemical nematicide fluopyram only improves shoot fresh weight by 8 % at full biocontrol potential of 100 %.

Statistical analysis reveals a significant improvement of shoot fresh weight after nematicide treatment and a highly significant shoot fresh weight increase following application of PL251 at ABC (ANOVA, p=0.0222, df=14; Bonferroni multiple comparison test, t=4.191 for UTC vs. PL251 at ABC). The results clearly show that PL251 displays an additional plant health effect independent of its nematicidal potential leading to improved shoot weight in tomato.

### Example 2: Growth Chamber Tomato In-planta Jar assay to evaluate the efficacy of BioAct against root-knot-nematodes as well as its plant growth promotion (PGP) effect

### Treatments

1. UTC-75mls of water
2. BioAct applied at planting 1 uL (1.08mg) per 100ml of soil, 5.5x10⁵ viable spores per cm³ substrate
*Soil Combination added 225ml to the plastic jar

Procedure: Eight 300ml (10oz) polypropylene flip top jars for this assay were prepared to examine fungal colonization of a liquid formulation of P. lilacinum strain 251, PGP effects, and to determine nematode reduction. Each jar was filled with soil combination (type of soil to mimic field soil conditions). Planted tomato seeds, ACE 55 Tomato Variety, Mountain Valley Seed Co.. This assay is to examine *Purpureocillium lilacinum* fungal growth in-planta, determining a soil type that would provide a carbon source for the fungus to grow, colonize the soil and protect the roots from root-knot nematode infection.

The treatment jars received 75mls of drench solution. Each UTC jar was watered with 75ml of tap water at time of planting. Each treatment was placed in sterile greenhouse flats to eliminate cross-contamination. All treatments were placed in aplant growth chamber. Experiment duration was 7 week trial, the settings for the growth chamber were set for photoperiod of 12hrs of light and 12hrs of dark, light intensity 320uMol, temperature of 25°C for light period, 20°C for dark period.

Tomato In-planta jar assay takedown: Each root system was washed from the 225mls of soil in a plastic 3 quart pitcher. As roots were cleaned, they were placed on paper towels to dry excess water running off.

Analysis of Tomato Roots: Tomato roots were analyzed using the program WinRhizo, Regent Instruments, Inc (Arsenault et al, 1995). This program provides for a complete plant root measurement and analysis. WinRhizo allows looking at the length, area, volume, topology, and architecture of the plant roots. Each UTC and Treatment were scanned to examine the total root surface area (cm²).

Staining RKN egg masses: Once roots were scanned using WinRhizo, the roots were stained with Erioglaucine 1 mg/L solution for 15 mins. Each root system was submerged in the solution. The Erioglaucine Blue Solution stains the egg masses in bright blue (making it easier to visualize and count the fully developed females). The stain sticks to the gelatinous matrix that surrounds the RKN egg masses from the posterior end of the female nematode.

### Results:

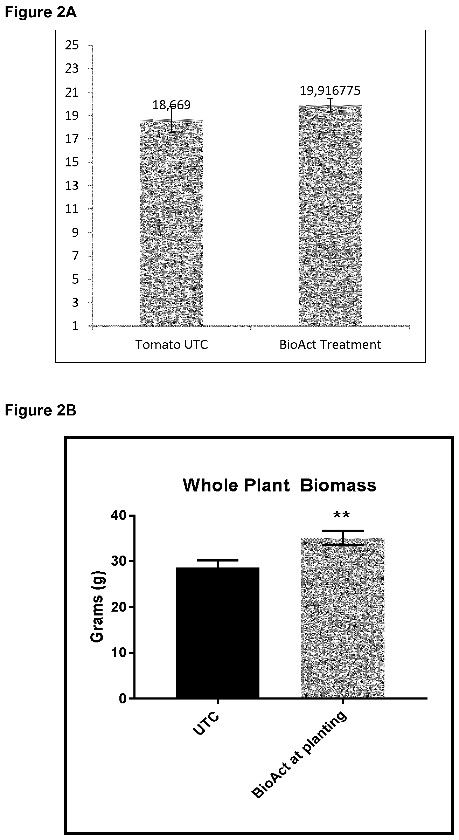

Total Root Surface Area: Comparing untreated with BioAct DC drench, on average an increase in root surface area is visible in the treatment. The treatment average measurement was 19.916 cm², untreated average was 18.669 cm². (see Figure 2A)

Whole Plant Biomass: Total fresh shoot (whole plant biomass) of Untreated compared to BioAct Treatment was evaluated. BioAct treatment had significantly higher fresh whole plant biomass than UTC. Larger tomato roots treated with BioAct drench showed an increase in lateral root growth as compared to UTC (see Figure 2B).

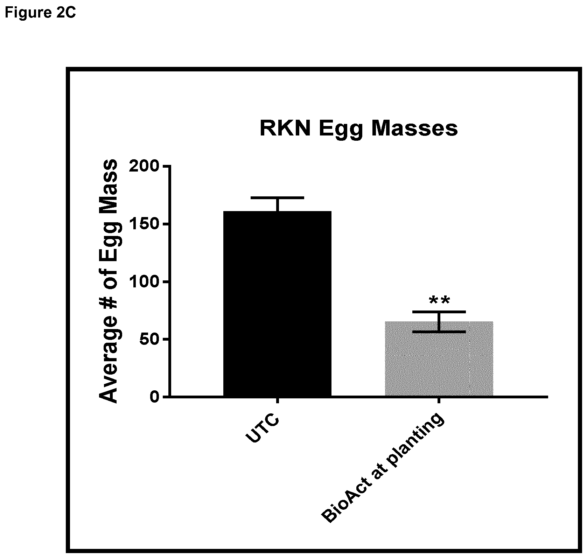

Nematode efficacy showing average number of egg masses: Nematicidal activity of Purpureocillium lilacinum strain 251 against Meloidogyne javanica. Overall, there was a decrease in the number of egg masses developed on BioAct treatment compared to UTC. Effects of BioAct treatment were significantly different from the UTC. One application of BioAct treatment showed a significant reduction of *M. javanica* egg masses. The average number of egg masses in the UTC was 161 compared to that in the BioAct treatment of 65.25 (see figure 2C). Evaluation of the number of egg masses definitely illustrates a smaller number of J2s penetrating and fully developing into a female adult, decreasing the number of egg mass production.

### Example 3: Growth Chamber Tomato In-planta Jar assay to evaluate the efficacy of two different formulations of BioAct (liquid and WG) against root-knot nematodes and to compare their PGP performance

### Treatments

3. UTC-75mls of water
4. BioAct applied at planting 5.5x10⁵ viable spores per cm³ substrate
5. BioAct WG applied at planting 5.0mg per 100ml of soil (corresponding to 1.75x10⁶ viable spores per 100ml of soil
6. Blank Formulation applied at planting 1.08mg per 100ml of soil

### *Soil Combination added 225ml to the plastic jar

Procedure: Twenty 300ml (10oz) polypropylene flip top jars were prepared to examine BioAct fungal colonization, PGP effects, and to determine nematode reduction. Each jar was filled with soil combination (type of soil to mimic field soil conditions). Planted tomato seeds were from the variety ACE 55, Mountain Valley Seed Co..
The treatment jars received 75mls of drench solution. Each UTC jar was watered with 75mls of tap water at time of planting. The blank formulation comprised the formulants of the liquid formulation, i.e. BreakThru S240 and Aerosil, each jar received the same amount as the one treated with the liquid formulation of BioAct, 2.7mg in 75mls of water. Pots treated with BioAct WG (wettable granule received 125mg in 75mls of water per treatment. Each treatment was placed in sterile greenhouse flats to eliminate cross-contamination. All treatments were placed in a plant growth chamber. The experiment duration was 7 weeks, the settings for the growth chamber were set for photoperiod of 12hrs of light and 12hrs of dark, light intensity 320uMol, temperature of 25°C for light period, 20°C for dark period.
Two weeks after planting tomato seeds, inoculated each jar with 300 active infective stage juveniles of Meloidogyne javanica (freshly hatched J2s from our root knot nematode tomato cultures).

Tomato In-planta jar assay takedown: Each root system was washed from the 225mls of soil in a plastic 3 quart pitcher. As roots were cleaned, they were placed on paper towels to dry excess water running off. Each tomato plant was weighed to determine the total plant biomass. Afterwards, the shoots were cut off and discarded. Each root system was weighed per treatment to determine the weight of treatment.

Staining RKN egg masses: Roots were stained with Erioglaucine 1 mg/L solution for 15 mins. Each root system was submerged in the solution.

Statistical Analysis: Experiment set up is randomized and comprises 4 reps per treatment, One-Way analysis of variance (ANOVA) was performed.

### Results:

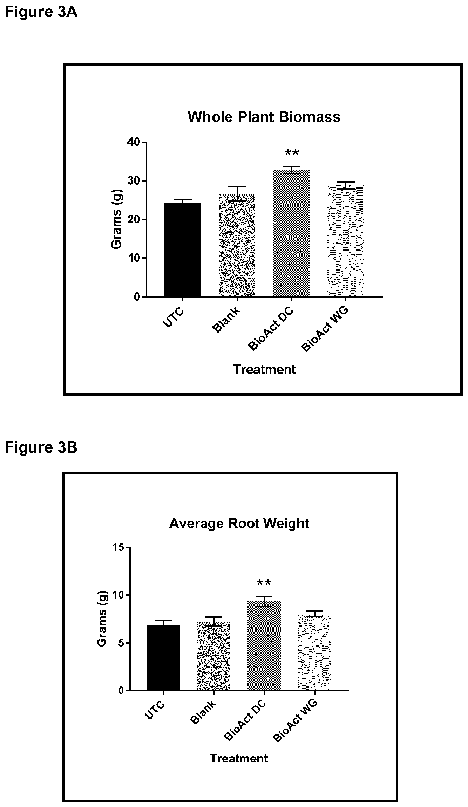

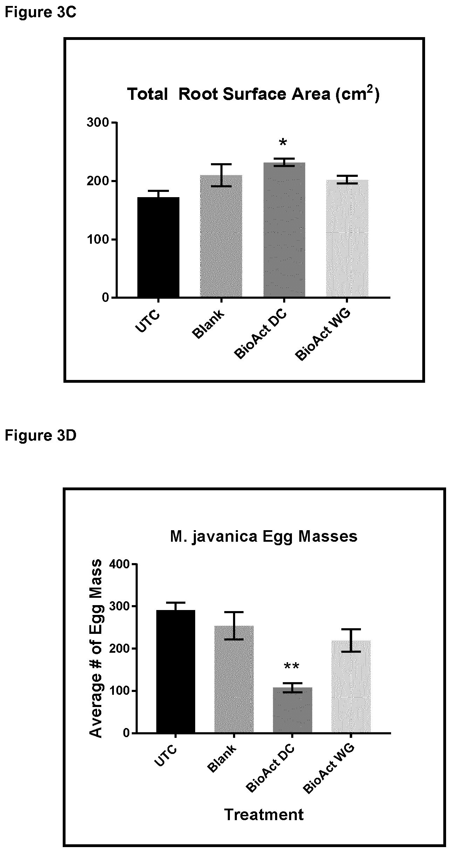

There is a significant increase in whole plant biomass in BioAct liquid treatment compared to UTC and blank. BioAct WG also performed better than Blank and untreated (see Figure 3A).

The weight of root mass was examined for each treatment. There is a significant increase in root weight of BioAct liquid compared to UTC and Blank. It is evident that PGP present with BioAct compared to Blank, and UTC (see Figure 3B).

The total root surface area (cm²) of each treatment was examined using the WhinRhizo root analysis program. BioAct treatment results in significantly more average root weight as compared to UTC and Blank (see Figure 3C).

The number of RKN egg masses were counted for each treatment (4 reps per treatment). There is significance in the reduction of the number of egg masses in BioAct liquid treatment compared to UTC and Blank treatments.

### Example 4: Tomato Drench Assay to evaluate PGP properties of P. lilacinum strain 251 as compared to other fungal strains

Assay: 30 day evaluation to allow tomatoes to grow and examine the foliar canopy, determination of increase in leaf surface area.

### Treatment List:

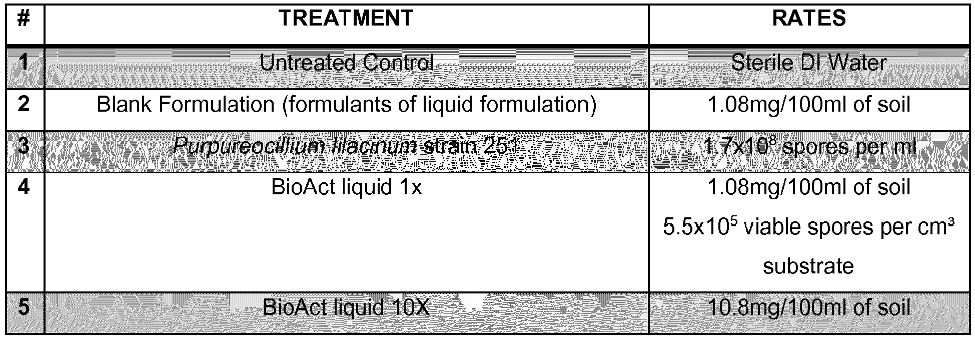

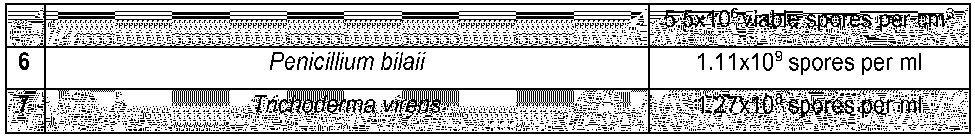

Protocol: 6x7 plug trays were cut from a 10x20 (200) cell plug tray (Hummert, Int). Each cell tray was filled with potting soil and every other cell was seeded with one tomato seed (Washington Cherry Tomato Variety). Each seeded cell in the tray was treated with 2mL of material using a serological pipette. Plug trays were watered from the bottom by flooding a clam shell tray. Flats were then placed under high intensity lights (-300 Einsteins, set to 16 hour light/8 hour dark schedule) and watered once a day. Samples were compared based on volume. Every 2-3 days, clam shells were randomized. Plants were rated 30 days after planting. Three replicates per treatment were prepared.

Drench Solution Preparation: Fungal strains (Penicillium, Trichoderma and P. lilacinum) were streaked onto Potato Dextrose Agar plates to enable fungal spores to grow.
1. Set up day: 10mL of sterile DI water was poured on fungal plate
2. Fungal spores were scrapped with an L-shaped rod to break away the spores from the agar, prepare spore suspension.
3. The spore suspension was collected in a falcon tube, and then passed through a sterile piece of cheesecloth to ensure only spores (no agar) were present.
4. Spore suspension was quantified using a hemocytometer and then diluted to the desired concentrations.
5. 2ml of spore suspension was added to each seeded cell in a tray.

Measurements: Leaf surface area was examined using Image J software and documented by taking top view images of each treatment rep block using a Nikon Camera and tripod. In each picture a ruler placed next to each tomato tray treatment which is used as reference to calibrate the software's scale.

### Results

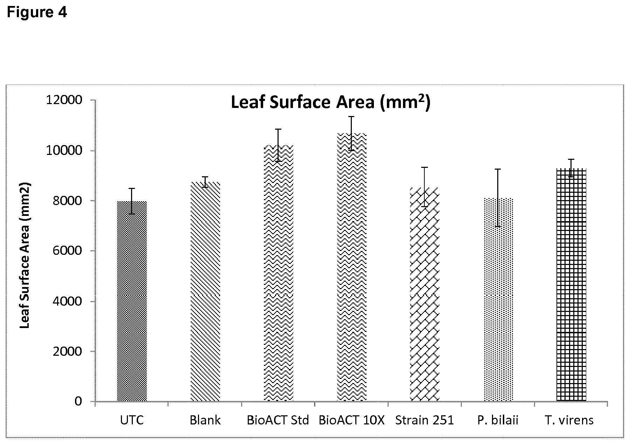

**Leaf Surface Area (see** **Figure 4****):** The following strains and rates had significant increases in leaf surface area compared to the "Untreated Water Control" trays: *Trichoderma virens, Purpuroecillium lilacinum,* and both rates of BioAct liquid (Standard and 10x). Overall, BioAct liquid 1x and 10X as well as the unformulated P. lilacinum strain 251 had a larger increase in leaf surface foliar canopy compared to UTC, and P. bilaii.

BioAct liquid 1x and BioAct liquid 10X have a larger leaf surface area compared to all other treatments. Examining BioAct liquid treatments, the surfactant in the formulation could be aiding in the movement of Purpuroecillium lilacinum strain 251 spores in the soil mix.

### Example 5: Corn Drench Assay with a liquid formulation of spores of P. lilacinum strain 251 (BioAct liquid)

Different doses of a liquid formulation of Purpureocillium lilacinum strain 251 (BioAct liquid) were tested in a small pot drench assay on corn to evaluate plant growth promotion.
Start Date: 8/19/15: Set up experiment, 9/02/15: Take down experiment (14 days experiment)
Method: 3x3x3 cubic inch small pots were filled with autoclaved 3:1 Soil: Sand mix. There were 4 pots per treatment replicate (12 pots total per treatment). 2 sterilized GP7169 GT corn seeds were planted 1-inch deep in each pot, 2 inches apart. 50 milliliters of drench solution were applied per pot at the rate specified for each treatment (see "Calculations for Drench" section).
Environment: Light Racks
   - Light Temperature Range= 20°C low to 30°C high
   - Relative Humidity: low 21 % to high 62%

### Treatments:

1. UTC
2. Votivo 5% (Assay Positive Control)
3. BioAct 2.13x10⁸ spores/pot
4. BioAct 2.13x10⁹ spores/pot

**Calculations for Drench:** All BioAct drench solutions were made at 600ml per treatment. For BioAct DC
1. Standard rate: 1.08mg/100mL soil x 4.25 = 4.59mg/pot 2.13x10⁸ spores/pot
2. 10x rate: 10.8mg/100mL soil x 4.25 = 45.9mg/pot 2.13x10⁹ spores/pot
3. For Votivo 5%, 35 ml of Votivo were added into 665ml of DI water, equivalent to 9.15x10⁷ CFU/pot.

### Observations Notes and Measurements:

1. Germination (poor, normal), Phytotoxicity (if any)
2. Whole Plant Biomass (fresh)
3. WinRhizo Root Analysis

### Results:

Germination: normal. Phytotoxicity: none observed

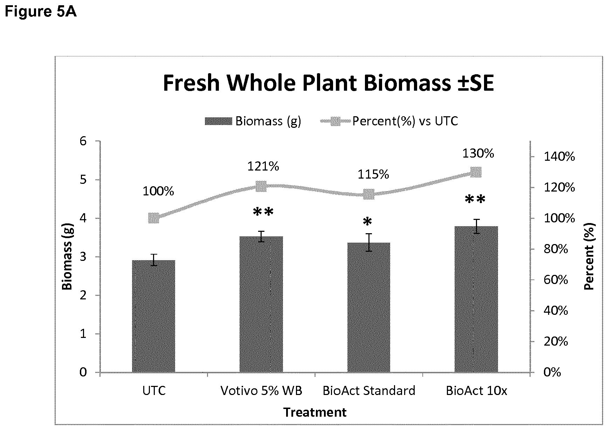

Fresh Whole Plant Biomass (FWPB) (Figure 5A): Up to 24 plants were measured. Plants that were not measured include non-germinated seedlings and incomplete plants (incomplete plants are ones without roots or shoots). A dose response was observed with the BioAct treatments with the highest rate (BioAct 10x) having the best PGE (plant growth enhancement) (according to t-test analysis, if p<0.1, then there is a significant difference). The difference between the highest rate and standard rate was 15% although the standard rate of BioAct was also significantly better UTC.

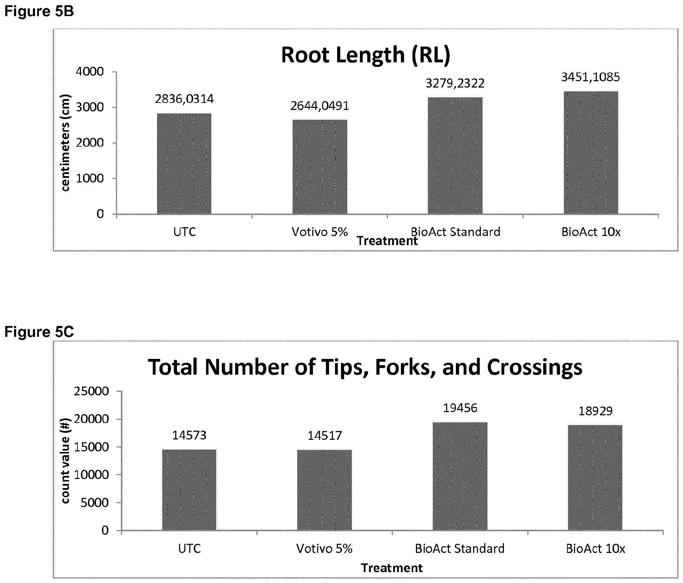

WinRHIZO analysis of 6 roots per treatment (sub-sample of up to 24 possible roots). Results are shown in Figure 5B and 5C. Overall, BioAct liquid 1x and BioAct liquid 10x treatments had higher values of RL and total number of TFC.

BioAct dose rates were tested in the small pots drench assay for plant growth enhancement. BioAct doses were tested at standard rate (4.59 mg or 2.13x10⁸ spores/pot) and 10 times the standard rate (45.9 mg or 2.13x10⁹ spores /pot) alongside UTC (negative control), and Votivo 5% (positive control). Fresh whole plant biomass (FWPB) was taken 14 days after planting. A dose response with BioAct was observed in the assay. BioAct standard rate and 10x rate showed significantly higher FWPB than UTC. 6 roots of each treatment were analyzed using the WinRHIZO. A dose rate was observed and similarly to the FWPB results, BioAct standard and 10x rate had the best root length(RL), and total number of tips(TFC), forks, and crossings. Votivo 5% roots generally did not show better root architecture than UTC. In conclusion, plant growth enhancement with BioAct was shown in a 14-day corn drench bioassay.

### Example 6: Nematode and greenhouse trials to identify differences in PGP (plant growth promotion) and nematode galling in plants treated with a liquid formulation of P. lilacinus strain 251 (BioAct) in comparison with the UTC in two different substrates

### General Materials and Methods:

### Tomatoes:

Variety: Ace 55
Tomatoes were planted into 200 cell plug trays. The seeds were distributed in a checkerboard pattern to allow sufficient spacing for the plants to expand prior to transplanting. The tomatoes were transplanted into 5.5" pots after two weeks.

### Cucumbers:

Variety: Sultan
The cucumbers were direct seeded into 32 oz. cups.

### Potting mixes:

Sand: Coarse Play Sand
Potting soil
Kaolin clay
The plants were grown in two different potting mixes either comprising sand and soil or a clay-based additive and soil.

### Experimental Design:

### Treatments:

1. UTUI-Untreated uninfested
2. UTC-Untreated Control, infested with RKN (root knot nematodes)
3. Bioact 1x-One application of Bioact, infested with RKN nematodes
4. Bioact 2x-Two applications of Bioact, infested with RKN nematodes

### Replicate Number: 10

BioAct Drench Applications: Prepared BioAct drench solutions for each 4 trials, each plant received 30mls of drench solution. The spore load per application was 5.5x10⁵ viable spores per cm³ substrate.
Pesticide Applications: Cucumbers received fungicide treatment in addition

**Tomato trial in sandy soil soil**

| | |
|---|---|
| Plant Date: | 7/11/2016 |
| Transplant Date: | 7/25/2016 |
| Infestation Date: | 8/9/2016 |
| 1st Treatment Date: | 7/29/2016 |
| 2nd Treatment Date: | 8/16/2016 |
| Take Down: | 10/3/2016 |

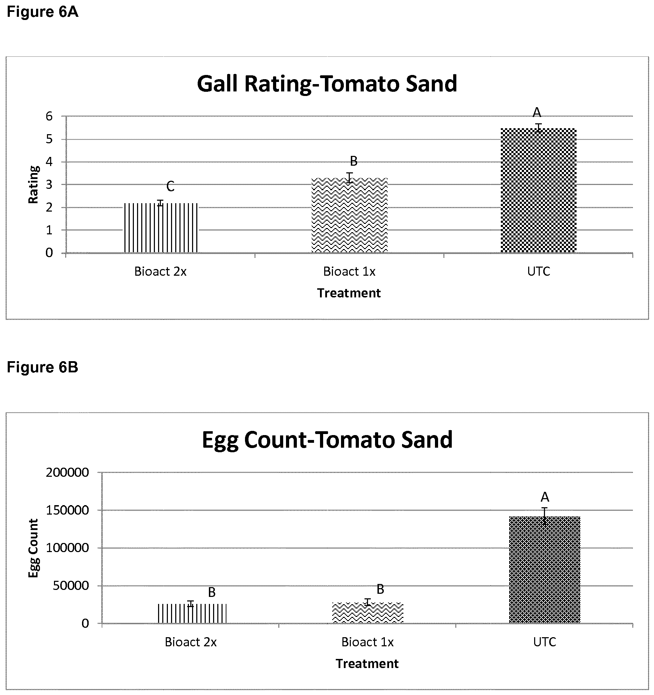

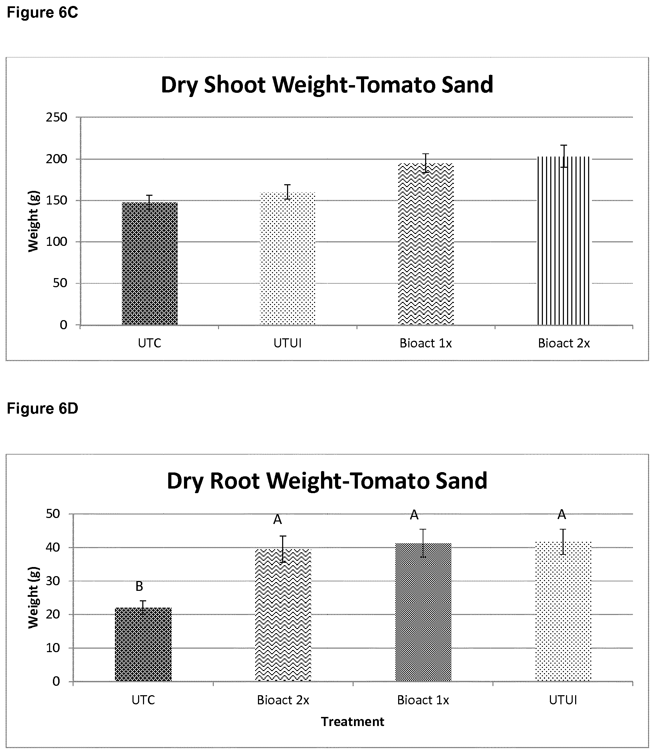

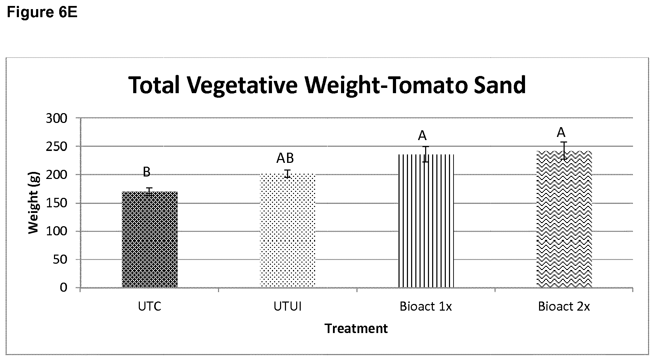

**Results:** There was a significant difference in dry shoot weight, dry root weight and total vegetative weight between the UTC and the Bioact treatments (Figures 6C, 6D and 6E). Also gall rating and egg count were significantly different (Figures 6A and 6B).

**Tomato trial in soil mixed with claysoil**

| | |
|---|---|
| Plant Date: | 7/18/2016 |
| Transplant Date: | 8/1/2016 |
| Infestation Date: | 8/17/2016 |
| 1st Treatment Date: | 8/9/2016 |
| 2nd Treatment Date: | 8/23/2016 |
| Take Down: | 9/30/2016 |

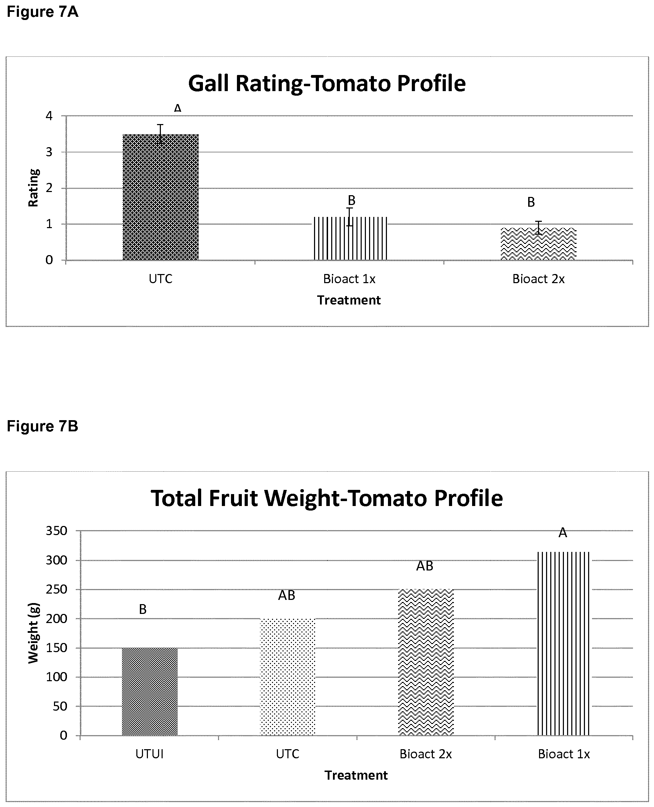

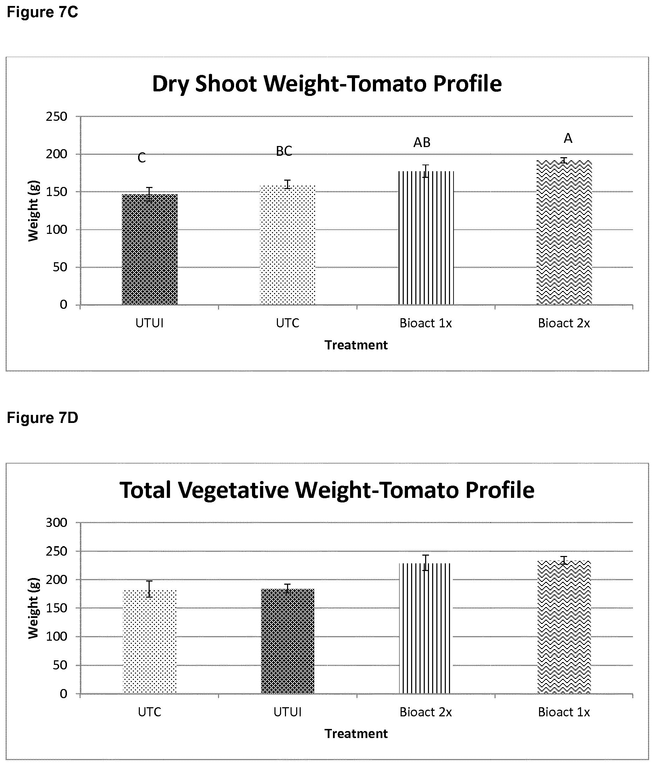

**Results:** Significant reduction in gall development visible in BioAct treatments compared to control (UTC) (Figure 7A), there was good nematode infection (galling) seen in the UTC. Differences in total fruit weight (Figure 7B) were also observed between UTUI and treated plants. There was a significant difference in dry shoot weight between the UTC and the Bioact 2x (Figure 7C) and total vegetative weight (Figure 7D).

**Cucumber trial in sandy soil**

| | |
|---|---|
| Plant Date: | 7/18/2016 |
| Infestation Date: | 8/9/2016 |
| 1 st Treatment Date: | 7/29/2016 |
| 2nd Treatment Date: | 8/16/2016 |
| Take Down: | 10/3/2016 |

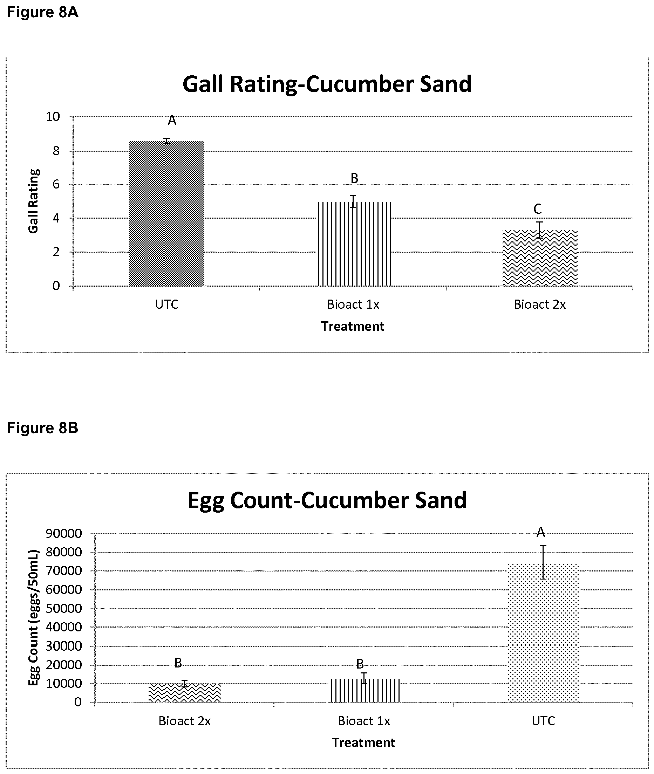

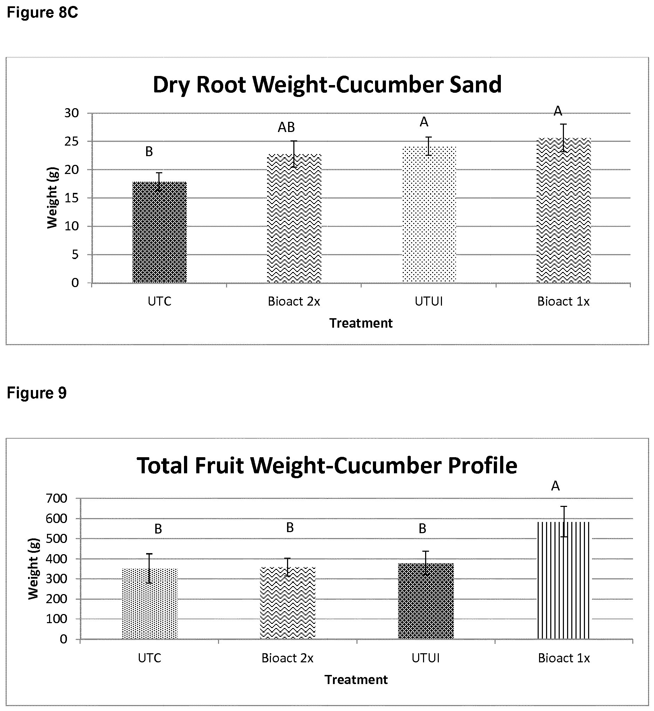

**Results:** Significant differences were observed between BioAct treatments and UTC (with nematodes) in gall rating and egg count (Figures 8A and B). The reduction in the number of eggs compared to UTC was visible. Differences were also observed in dry root weight (Figure 8C).

**Cucumber trial in soil mixed with clay**

| | |
|---|---|
| Plant Date: | 7/25/2016 |
| Infestation Date: | 8/17/2016 |
| 1 st Treatment Date: | 8/9/2016 |
| 2nd Treatment Date: | 8/23/2016 |
| Take Down: | 10/3/2016 |

**Results:** Bioact liquid 1 x performed better than the other three treatments. There was significant increase in fruit yield with one application of BioAct DC compared to UTUI and UTC. Significant differences in the total fruit weight were observed /Figure 9A).

### Example 7: Trials to evaluate nematicidal efficacy and yield increase by P. lilacinum strain 251 in cucumber and tomato in greenhouse area

### General Materials and Methods:

This yield study was carried out in high commercial greenhouses representative for most important cucumber and tomato areas in Spain and Italy, respectively. In total 6 trials were conducted in following provinces and trial sites:

### Yield program for cucumber:

1. Spain:
   - Granada / Carchuna
2. Italy:
   - Lazio / Sabaudia
   - Sicily / Vittoria

### Yield program for tomatoes:

1. Spain:
   - Granada / Salobreña
   - Cadiz / Zahora
2. Italy:
   - Puglia / Palagiano

The yield program indicated splitting of trials in each crop throughout short crop cycle (spring) as well as long-term crop cycle for each country and experimental site. The selection for variety followed agronomic practice and market requests.

### Experimental design:

The trial sites were selected with a history of root knot nematode population; preferably medium nematode population. To assess initial nematode population and their distribution before trial start soil samples from 4 areas in the experimental field were selected. In each area, 10 vertical core subsamples, discarding the top 10 cm of soil, were sampled within the 10 to 30cm feeder-root zone of plant, respectively.

The experimental set up was fully randomized and comprised 6 treatments with 5 replicates for each trial. Application of the formulated product PL251 (liquid formulation of P. *liliacinum* comprising BreakThru S240 and Aerosil) was applied sequentially with 0.75 L/ha (with 5.4x10¹⁰ viable spores /ml throughout cropping period.

Following agronomic practice one dripper per plant at two lines or one line irrigation system was set up to guarantee best chemigation and daily drip irrigation. Throughout season water amount of daily drip irrigation were adjusted according environmental conditions (air temperature °C) and developmental stage of plants (BBCH).

To keep sufficient moisture for fungal growth soil were kept moist after first application of PL 251 liquid at 14 days (d) prior to transplanting. For every further application via drip system (see table 10A and 10B) the following chemigation cycle was used:
1/3 of the total water volume (water only)
1/3 of the total water volume (water + PL 251)
1/3 of the total water volume (water only)

Fertilizer management followed local recommendation and farmer practice. To guarantee best pollination for yield thus, bumble bee colonies were used in each **trial** and greenhouse.

**Table A: Treatments for cucumber trial setup:**

| Treatment | Application | A | B | C | D | E | F |
|---|---|---|---|---|---|---|---|
| | Application timing | 14d prior to transplanting | at transplanting | 2d after transplanting | 4 weeks after transplanting | 8 weeks after transplanting | 20d after transplanting |
| 1 | UTC | | | | | | |
| 2 | PL 251 | 0.75L/HA | 0.75L/HA | | 0.75L/HA | 0.75L/HA | |
| 3 | Velum SC | | | 250 GA/HA | | | |
| 4 | PL 251 | 0.75L/HA | 0.75L/HA | | 0.75L/HA | 0.75L/HA | |
| 4 | Velum SC | | | 250 GA/HA | | | |
| 5 | PL 251 | | | | 0.75L/HA | 0.75L/HA | |
| 5 | Velum SC | | | 250 GA/HA | | | |

**Table B: Treatments for tomato trial setup:**

| Treatment | Application | A | B | C | D | E | F | G |
|---|---|---|---|---|---|---|---|---|
| | Application timing | 14d prior to transplanting | at transplanting | 2d after transplanting | 12 days after transplanting | 22 days after transplanting | 4 weeks after transplanting | 8 weeks after transplanting |
| 1 | UTC | | | | | | | |
| 2 | PL 251 | 0.75L/HA | 0.75L/HA | | | | 0.75L/HA | 0.75L/HA |
| 3 | Velum SC | | | 250 GA/HA | | | | |
| 4 | PL 251 | 0.75L/HA | 0.75L/HA | | | | 0.75L/HA | 0.75L/HA |
| 4 | Velum SC | | | 250 GA/HA | | | | |
| 5 | PL 251 | | | | | | 0.75L/HA | 0.75L/HA |
| 5 | Velum SC | | | 250 GA/HA | | | | |

### Efficacy assessment:

To investigate root galls development and efficacy of product, 15 plants were randomly selected at harvest in each plot, respectively. Hereunto, roots were digged with whole root system and washed carefully to bare root knot infestation, respectively. Based on root galls nematicidal activity was determined on the basis of the percentage (%) of gall reduction and/or damage of attack on each plant. Following assessment 100% indicate that no galls were found; 0% means that number of galls found on the roots of treated plants was equal to that in untreated control plants. Additionally crop safety was evaluated by estimating percentage of phytotoxicity on the whole plot.

### Yield assessment:

For yield assessment each harvest and/or pick of fruits were recorded throughout cropping period. Pickings were executed as many times as necessary following each variety dependent characteristic. The harvest foresaw first pickings 2 weeks after last application of PL 251, respectively. At each picking date fresh weight of fruits in kilogram per plot were recorded. Further fruits were assessed by size and weight following variety characteristics.

### Results

### Efficacy:

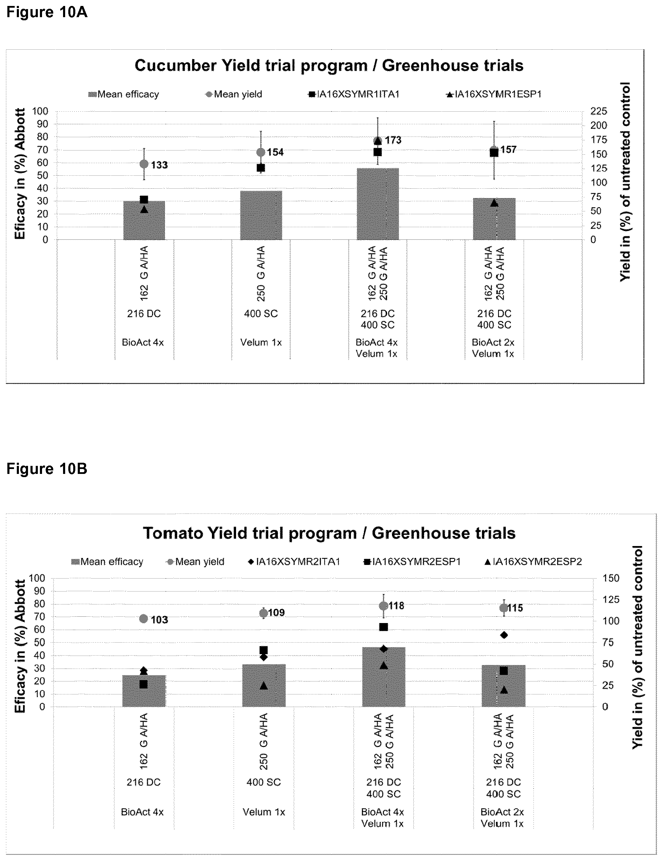

PL251 solo treatment indicated reduction in gall development compared to UTC. For the cucumber trial program (Figure 10A) efficacy for the biologic solo program showed highest efficacy in cucumber with approximately 30% compared to 24% in tomato (Figure 10B), respectively, Velum SC (Fluopyram) as chemical solo program however indicated similar efficacy levels in cucumber and tomato. The sequential application of Velum SC and PL251 throughout cropping period clearly indicated increased efficacy values in both crops versus chemical standard.

### Yield:

For yield increase significant differences in fruit weight and quantity between UTC and BioAct DC treated plants were observed. Statistical analysis reveals a significant improvement of fruit weight (kg) in cucumber and tomato following application of PL251, respectively. The results in both crops clearly indicate that PL 251 displays an additional plant health effect independent of its nematicidal potential leading to improved shoot weight in fruiting vegetables.

## Claims

1. A method for promoting or improving plant health and/or plant growth of agricultural plants
wherein the plants, the plant propagules, the seed of the plants and/or the locus where the plants are growing or are intended to grow are treated with an effective amount of a composition comprising the fungus Purpureocillium lilacinum or spores thereof.

2. The method of claim 1, wherein promoting or improving plant health comprises and/or manifests in improved stress tolerance, less dead basal leaves, greener leaf color, pigment content, photosynthetic activity and enhanced plant vigor.; or
wherein promoting or improving plant growth comprises or manifests in tillering increase, increase in plant height, bigger leaf blade, bigger leaf surface, stronger tillers, earlier flowering, early grain maturity, less plant verse (lodging), increased shoot growth, increased plant stand and early and better germination, earlier emergence, improved crop yield, improved total vegetative weight or whole plant biomass, improved protein content, improved oil content, improved starch content, improved root growth, improved root size, improved root weight, increased root weight, increased plant biomass and/or improved root effectiveness, improved shoot weight and improved fruit weight.

3. The method of any one of claims 1 to 2, wherein the P. lilacinum strain is strain 251 and/or a mutant of this strain having all the identifying characteristics of the strain.

4. The method of any one of claims 1 to 3, wherein plant growth refers to root growth, root size, root weight, fruit weight, shoot weight, leaf surface, plant biomass and/or crop yield.

5. The method of any one of claims 1 to 4, wherein said promoting or improving plant health and/or plant growth is independent of pathogenic nematode pressure.

6. The method of claim 5, wherein said promoting of improving plant health and/or plant growth is in the absence of pathogenic nematode pressure.

7. The method of any one of claims 1 to 6, wherein seed is treated.

8. The method of any one of claims 1 to 5, wherein said treatment is carried out in the soil prior to germination of a seed and/or in the soil in contact with a seed or root of said plant or where a plant is intended to grow.

9. The method of any one of claims 1 to 8, wherein the treatment is carried out at least twice.

10. The method of any one of claims 1 to 8, further comprising applying, simultaneously or sequentially, at least one further plant protection agent.

11. The method of claim 9, wherein said at least one further plant protection agent is selected from the group consisting of fluopyram, B. firmus strain CNCM 1-1582, B. subtilis, in particular strain QST713, abamectin, aldicarb, fenamiphos, fluensulfone, fluazaindolizine, oxamyl and a fumigant.

12. The method of any one of claims 1 to 11, wherein the agricultural plant is tomato, cucumber or corn.

13. The method of any one of claims 1 to 12, wherein said composition further comprises at least 75% polyether-modified trisiloxane.

14. The method of claim 13, wherein said polyether-modified trisiloxane is BreakThru S240.

15. The method of any one of claims 1 to 13, wherein said composition further comprises up to 8% fumed silica.
